# EUROPÄISCHE PATENTSCHRIFT

(11) **EP 0 486 581 B1**
(45) Veröffentlichungstag und Bekanntmachung des Hinweises auf die Patenterteilung: **07.02.1996**
(21) Anmeldenummer: 90912432.3
(22) Anmeldetag: 08.08.1990
(51) Int. Cl.: H04N 1/08

(54) **VORRICHTUNG ZUM AUTOMATISCHEN AUF- UND ABSPANNEN VON AUFZEICHNUNGSMATERIAL UND BETRIEBSWEISE DER VORRICHTUNG**
DEVICE FOR AUTOMATICALLY CLAMPING AND RELEASING A RECORDING MEDIUM AND ITS OPERATION
DISPOSITIF POUR TENDRE ET LIBERER AUTOMATIQUEMENT UN SUPPORT D'ENREGISTREMENT ET MODE DE FONCTIONNEMENT DE CE DISPOSITIF

(30) Priorität: 17.08.1989 DE 3927162
(43) Veröffentlichungstag der Anmeldung: 27.05.1992
(73) Patentinhaber: Linotype-Hell Aktiengesellschaft, D-65731 Eschborn (DE)
(72) Erfinder: BALZEIT, Ralf, D-2308 Preetz (DE); BEHRENS, Gunnar, D-2300 Kiel Russee (DE); BLÖHDORN, Gerhard, D-2314 Schönkirchen (DE); LASSEN, Bernd, D-2312 Mönkeberg (DE); PENZA, Hans, D-2308 Preetz (DE); ROTH, Norbert, D-2300 Kiel 14 (DE)
(86) Internationale Anmeldenummer: DE9000615
(87) Internationale Veröffentlichungsnummer: WO9103121

(56) Entgegenhaltungen:
- DE-A- 3 230 676
- DE-B- 2 209 515
- US-A- 3 343 173
- US-A- 3 908 981
- US-A- 3 966 198
- US-A- 4 268 841
- US-A- 4 330 798

## Beschreibung

Die Erfindung bezieht sich auf das Gebiet der elektronischen Reproduktionstechnik und betrifft eine Vorrichtung und deren Betriebsweise zum automatischen Aufspannen von Filmmaterial auf die Aufzeichnungstrommel eines Reproduktionsgerätes und zum Abspannen des durch ein Aufzeichnungsorgan belichteten Filmmaterials von der Aufzeichnungstrommel. Das Reproduktionsgerät ist insbesondere ein Farb-Scanner oder Farb-Recorder.

In der Reproduktionstechnik werden mit Farb-Scannern oder Farb-Recordern Farbauszüge für den Mehrfarbendruck hergestellt. Dazu werden zunächst durch optoelektronische, trichromatische Abtastung einer Farbvorlage Farbsignale gewonnen und diese durch eine Farbkorrektur in Farbauszugssignale umgewandelt. Auf einer Aufzeichnungstrommel des Farb-Scanners oder Farb-Recorders werden blattförmige Filmmaterialien, auch Filmfahnen oder Filmblätter genannt, aufgespannt und durch ein Aufzeichnungsorgan, das durch die Farbauszugssignale helligkeitsmoduliert ist, punkt- und zeilenweise belichtet. Die belichteten Filmfahnen werden von der Aufzeichnungstrommel abgespannt und entwickelt. Die entwickelten Filmfahnen sind die Farbauszüge für den Mehrfarbendruck.

Die zu belichtenden Filmfahnen unterschiedlichen Formats können bereits als Blattfilmmaterial vorliegen, das zum Aufspannen einer Blattfilm-Kassette entnommen wird, oder vor der Aufspannung von einem in einer Rollfilm-Kassette befindlichen Rollfilmmaterial abgeschnitten werden.

Die zu belichtenden Filmfahnen werden bei herkömmlichen Farb-Scannern oder Farb-Recordern manuell auf die Aufzeichnungstrommel aufgespannt und dort entweder mit Klebeband oder durch eine Vakuum-Ansaugung fixiert.

Für einen effektiven und wirtschaftlichen Einsatz eines Farb-Scanners oder Farb-Recorders ist es erforderlich, den Wirkungsgrad insbesondere durch Verkürzen der Vorbereitungs- und Einstellzeiten am Farb-Scanner gegenüber den für die eigentliche Filmbelichtung benötigten Zeiten zu erhöhen. Die Vorbereitungs- und Einstellzeiten lassen sich beispielsweise dadurch reduzieren, daß die optimalen Einstellparameter für eine gute Reproduktion mittels Arbeitsvorbereitungs-Geräten (AV-Geräten) von einem Bediener in einem Vorprozeß ermittelt und gespeichert werden und dann unmittelbar vor der Filmbelichtung in kurzer Zeit in den Farb-Scanner übertragen werden. Gleichzeitig müssen möglichst viele, normalerweise vom Bediener auszuführende Arbeitsschritte wie beispielsweise das Auf- und Abspannen der Filmfahnen auf die bzw. von der Aufzeichnungstrommel, automatisiert werden.

Bei sogenannten Hellraum-Geräten, also bei Geräten, die nicht in Dunkelkammern, sondern bei Tageslicht arbeiten, ist ferner zu beachten, daß die Entnahme des Filmmaterials aus der Vorratskassette, der Transport zur Aufzeichnungstrommel und das Auf- und Abspannen unter Lichtabschluß erfolgen muß.

Aus der DE-PS 22 09 515 ist bereits eine Vorrichtung zum Auf- und Abspannen von blattförmigen Filmfahnen auf die bzw. von der Aufzeichnungstrommel eines Farb-Scanners bekannt. Die zu belichtenden Filmfahnen, die mit Registerlochungen versehen sind und sich in einer Blattfilm-Kassette befinden, werden mittels eines manuell betätigbaren Rollen- und Hebelmechanismus mit ihren Registerlochungen über die auf der Aufzeichnungstrommel befindlichen Registerstifte gehängt, durch Drehen der Aufzeichungstrommel aus der Blattfilm-Kassette gezogen und durch Vakuum auf der Aufzeichnungstrommel fixiert. Nach der Belichtung werden die Filmfahnen durch den Rollen- und Hebelmechanismus von der Trommeloberfläche abgehoben und in die Blattfilm-Kassette zurücktransportiert.

Die aus der DE-B-22 09 515 bekannte Vorrichtung hat den Nachteil, daß nur mit Registerlochungen versehene Filmfahnen vorgegebener Formate auf- und abgespannt werden können und daß das Auf- und Abspannen nur unter Mitwirkung eines Bedieners erfolgen kann.

Aus der US-A-4,268,841 ist ein weiteres elektronisches Reproduktionsgerät bekannt, das bereits eine Vorrichtung zum automatischen Aufspannen von blattförmigem Aufzeichnungsmaterial auf eine Aufzeichnungstrommel, zur Vakuumansaugung des Aufzeichnungsmaterials an die Aufzeichnungstrommel und zum automatischen Abspannen des belichteten Aufzeichnungsmaterials von der Aufzeichnungstrommel aufweist. Das blattförmige Aufzeichnungsmaterial wird von einer Versorgungsstation automatisch über eine Transporteinrichtung zur Aufzeichnungstrommel transportiert, mit Hilfe eines Ringkanals zwischen Trommeloberfläche und Gehäusewand um die Aufzeichnungstrommel gewickelt und dort durch Vakuumansaugung fixiert. Nach der Belichtung wird das Aufzeichnungsmaterial ebenfalls automatisch von der Aufzeichnungstrommel abgespannt und einer Austrittsöffnung im Gerät zur Weiterverarbeitung zugeführt.

Die aus der US-A-4,268,841 bekannte Vorrichtung hat ebenfalls den Nachteil, daß nur blattförmiges Aufzeichnungsmaterial auf- und abgespannt werden kann und daß keine speziellen Maßnahmen angegeben sind, die einen reibungslosen, automatischen Ablauf des Auf- und Abspannens garantieren.

Aus der DE-A-32 30 676 ist eine Vakuum-Aufspannvorrichtung bekannt, die zur Fixierung von blattförmigem Aufzeichnungsmaterial auf einer Aufzeichnungstrommel eine Kombination aus pneumatischen und mechanischen Komponenten verwendet.

Durch Zuschalten einzelner Saugloch-Gruppen oder Saugloch-Reihen wird erreicht, daß Aufzeichnungsmaterial verschiedener Formate ohne hohe Vakuum verluste aufgespannt werden kann. Mittel zur Steuerung der Ventile und zum Transport des Aufzeichnungsmaterials zu oder von der Aufzeichnungstromes sind nicht angegeben.

Die aus der DE-A-32 30 676 bekannte Vorrichtung hat somit den Nachteil, daß die Zuführung des blattförmigen Aufzeichnungsmaterials von Hand erfolgen muß und daß die Umschaltung der Saugloch-Gruppen oder -Reihen nicht automatisch in Abhängigkeit vom Auf- und Abspannvorgang und/oder vom jeweiligen Format des aufzuspannenden Aufzeichnungsmaterials erfolgt.

In der Reproduktionstechnik geht die Tendenz dahin, ungelochtes Rollfilmmaterial zu verwenden und die jeweils erforderlichen Film längen von dem Rollfilmmaterial abzuschneiden und aufzuspannen. Hinzu kommt der Wunsch, beliebige Formate auf- und abspannen zu können. Die Praxis hat gezeigt, daß es schwierig ist, insbesondere großformatige Filmfahnen genau und faltenfrei auf die Aufzeichnungstrommel aufzuspannen. Das genaue und glatte Aufspannen der Filmfahnen ist aber eine unerläßliche Voraussetzung für die Belichtung von passergenauen Farbauszügen und für die Herstellung qualitativ hochwertiger Mehrfarbendrucke.

Der Erfindung liegt daher die Aufgabe zugrunde, eine Vorrichtung und deren Betriebsweise zum automatischen Auf- und Abspannen von ungelochtem Aufzeichnungsmaterial auf die bzw. von der Aufzeichnungstrommel eines Reproduktionsgerätes anzugeben, durch die ein sicheres und glattes Aufspannen und ein sicheres Abspannen von insbesondere großflächigem Filmmaterial gewährleistet ist, so daß ein reibungsloser Arbeitsablauf und eine hohe Produktionsqualität erricht werden.

Diese Aufgabe wird in bezug auf die Vorrichtung durch die im kennzeichnenden Teil des Anspruchs 1 angegebenen Merkmale und in bezug auf die Betriebsweise durch die im kennzeichnenden Teil des Anspruchs 28 angegebenen Merkmale gelöst.

Die Erfindung wird im folgenden anhand der Figuren 1 bis 7 näher erläutert:

Es zeigen:
- Fig. 1: den prinzipellen Aufbau einer Vorrichtung zum automatischen Auf- und Abspannen von Aufzeichnungsmaterial auf die bzw. von der Aufzeichnungstrommel eines Farb-Recorders im Schnittbild;
- Fig. 2: den Beginn des Aufspannvorgangs, bei dem sich die Aufzeichnungstrommel in einer Aufspann-Startposition befindet;
- Fig. 3: den Aufspannvorgang zum Zeitpunkt, in dem eine Filmschlaufe gebildet wird;
- Fig. 4: den Aufspannvorgang nach Abschneiden einer Filmfahne von einer Filmbahn;
- Fig. 5: den Aufspannvorgang beim Fixieren der abgeschnittenen Filmfahne auf der Aufzeichnungstrommel;
- Fig. 6: den Beginn des Abspannvorgangs, bei dem sich die Aufzeichnungstrommel in einer Abspann-Start-Position befindet; und
- Fig. 7: den Abspannvorgang beim Abschälen der belichteten Filmfahne von der Aufzeichnungstrommel.

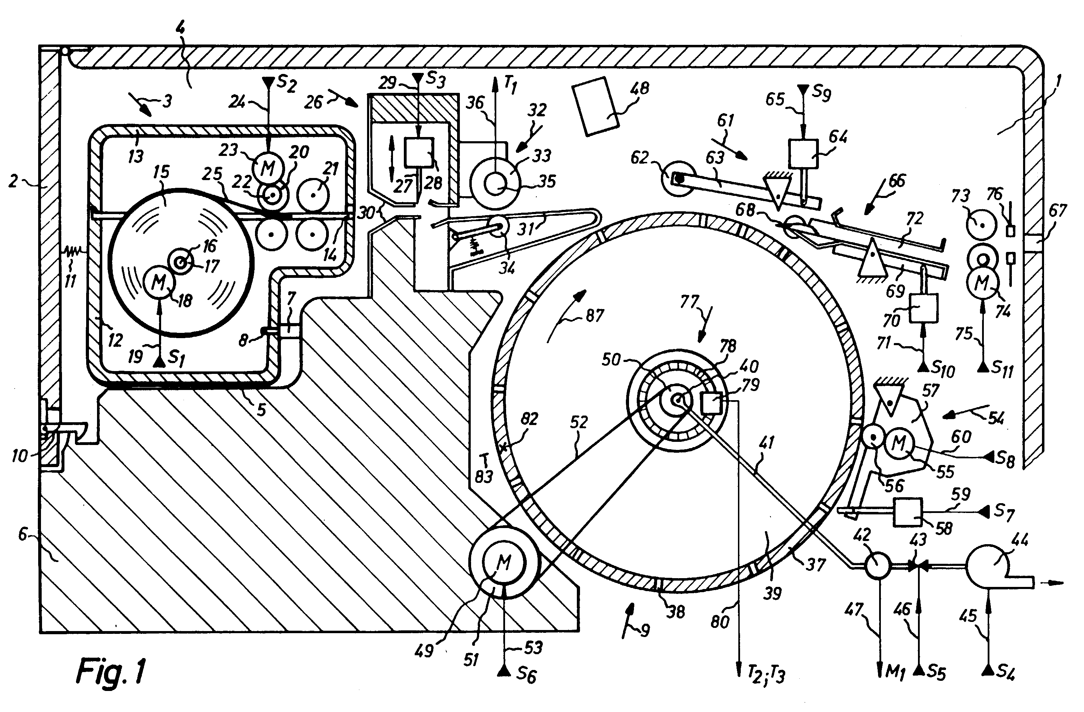

Fig. 1 zeigt als Schnittbild den prinzipiellen Aufbau einer Vorrichtung zum automatischen Auf- und Abspannen von Aufzeichnungsmaterial auf die bzw. von der Aufzeichnungstrommel eines Farb-Recorders, von dem lediglich die Aufzeichnungstrommel, der Dunkelraum für die Belichtung und ein Teil des Geräteträgers dargestellt sind.

Der Dunkelraum 1 des Farb-Scanners weist an der linken Seite eine lichtdicht schließende Ladeklappe 2 auf. Durch die geöffnete Ladeklappe 2 wird eine Rollfilm-Kassette 3 als Geber-Kassette in ein Kassetten-Einschubfach 4 des Farb-Recorders eingeschoben und auf einer Ladebühne 5 des Geräteträgers 6 abgesetzt. Mit Hilfe von im Geräteträger 6 befestigten Zentrierstiften 7 und entsprechenden Zentrierbohrungen 8 in der Wandung der Rollfilm-Kassette 3 wird diese genau zum Geräteträger 6 und zu einer Aufzeichnungstrommel 9 des Farb-Recorders ausgerichtet. Nach Schließen und Verriegeln der Ladeklappe 2 mittels der Verriegelung 10 wird die Rollfilm-Kassette 3 durch Federn 11 an die Zentrierstifte 7 angedrückt und in dem Kassetten-Einschubfach 4 fixiert. Die Rollfilm-Kassette 3, die aus einem Unterteil 12 und einem abnehmbaren, lichtdicht schließenden Deckel 13 besteht, weist eine schlitzförmige Filmdurchtritts-Öffnung 14 auf.

Die Rollfilm-Kassette 3 wurde außerhalb des Farb-Scanners durch den geöffneten Deckel 13 mit einer Filmrolle 15 vorgegebener Breite bestückt, indem der Hohlkern der Filmrolle 15 auf einer innerhalb der Rollfilm-Kassette 3 gelagerten Welle 16 befestigt wurde. Ein Ende der Welle 16 ist durch eine Bohrung in der Wandung der Rollfilm-Kassette 3 nach außen geführt und dort mit einem Antriebsrad 17 versehen. Beim Einbringen der Rollfilm-Kassette 3 in das Kassetten-Einschubfach 4 wird das Antriebsrad 17 an einen Wickel-Motor angekoppelt, der ortsfest am Geräteträger 6 befestigt und durch ein Steuersignal S₁ auf einer Leitung 19 gesteuert wird.
Innerhalb der Rollfilm-Kassette 3 befinden sich in der Höhe der Filmdurchtritts-Öffnung 14 ein Filmtransport-Rollenpaar 20 und ein Dichtungs-Rollenpaar 21, von denen jeweils eine Rolle an der Wand des Deckels 13 und die andere Rolle an der Wand des Unterteils 12 drehbar gelagert sind. Das Wellenende einer Rolle des Filmtransport-Rollenpaares 20 ist aus der Rollfilm-Kassette 3 herausgeführt und mit einem Antriebsrad 22 versehen, das beim Einschieben der Rollfilm-Kassette 3 mit einem ortsfesten Filmtransport-Motor 23 gekoppelt wird. Der Filmtransport-Motor 23 ist durch ein Steuersignal S₂ auf einer Leitung 24 steuerbar. Das Dichtungs-Rollenpaar 21 dichtet den Kassetten innenraum lichtmäßig gegenüber der Filmdurchtritts-Öffnung 14 ab. Die Länge des Filmtransport-Rollenpaares 20, des Dichtungs-Rollenpaares 21 und der Filmdurchtritts-Öffnung 14 entspricht der maximal möglichen Breite der Filmrolle 15, die sich wiederum nach der konstruktiven Länge der Aufzeichnungstrommel 9 richtet.

Bei Bestücken der Rollfilm-Kassette 3 wurde der Anfang der Filmrolle 15 in das Filmtransport-Rollenpaar 20 eingefädelt. Der Winkel-Motor 18 arbeitet zusätzlich als elektrische Feder, indem er durch permanente Erregung ein kleines Gegendrehmoment zum Drehmoment des Filmtransport-Motors 23 erzeugt, so daß die Filmbahn 25 zwischen Filmtransport-Rollenpaar 20 und der Filmrolle 15 stets leicht gespannt ist.

Die Auf- und Abspannvorrichtung weist weiterhin eine Film-Schneidevorrichtung 26 mit einem Schneidemesser 27 auf, die vor der Filmdurchtritts-Öffnung 14 der Rollfilm-Kassette 3 angeordnet und am Geräteträger 6 befestigt ist. Das Schnneidemesser 27 wird von einem geeigneten Stellorgan 28 betätigt, das durch ein Steuersignal S₃ auf einer Leitung 29 gesteuert wird. Das Schneidemesser 27 kann als Schlagmesser von der Breite der Filmbahn 25, das durch das Stellorgan 28 abgesenkt wird, oder als Kreismesser ausgeführt sein, das durch das Stellorgan 28 senkrecht zur Filmbahn 25 geführt wird und diese der Breite nach durchtrennt. Die Filmbahn 25 wird durch die Film-Schneidevorrichtung 26 mit Hilfe von Leitflächen 30 und 31 transportiert. Die Film-Schneidevorrichtung 26 hat die Aufgabe, von der Filmbahn 25 jeweils die momentan aufzuspannende und zu belichtende Filmfahne vorgegebener Länge abzutrennen.

Hinter der Film-Schneidevorrichtung 26 ist eine Filmlängen-Meßvorrichtung 32 vorgesehen, mit der die Länge der durchlaufenden Filmbahn 25 gemessen wird. Die Filmlängen-Meßvorrichtung 32 besteht aus einem Meßrad 33, einem federnd gelagerten Stützrad 34 und einem mit dem Meßrad 33 gekoppelten Drehimpulsgeber 35. Das Stützrad 34 ragt durch eine Öffnung in der Leitfläche 31 und drückt die Filmbahn 25 beim Durchlauf an das Meßrad 33 an. Beim Transport der Filmbahn 25 durch die Filmlängen-Meßvorrichtung 32 führt das Meßrad 33 eine Drehbewegung aus, die auf den Drehimpulsgeber 35 übertragen wird. Der Drehimpulsgeber 35 erzeugt auf einer Leitung 36 eine Meßtaktfolge T₁, deren Taktzahl ein Maß für die Länge der durchlaufenden Filmbahn 25 ist.

Die Aufzeichnungstrommel 9 des Farb-Recorders ist mittels Wellenstümpfen am Geräteträger 6 drehbar gelagert, was nicht näher dargestellt ist. Die Aufzeichnungstrommel 9 ist ein Hohlzylinder 37, dessen Stirnseiten verschlossen sind. Die Wandung des Hohlzylinders 37 ist mit Sauglöchern 38 versehen, welche die Trommeloberfläche mit dem Trommelinnenraum 39 verbinden. Einer der Wellenstümpfe ist hohl, wodurch ein Vakuumkanal entsteht, der den Trommelinnenraum 39 über ein an dem Wellenstumpf befindliches Vakuum-Verbindungsstück 40 mit einer ortsfesten Saugleitung 41 verbindet. Die Saugleitung 41 ist über ein Vakuummesser 42 und ein steuerbares Neben luft-Ventil 43 an eine Vakuum-Pumpe 44 angeschlossen. Die Vakuum-Pumpe 44 wird über ein Steuersignal S4 auf einer Leitung 45 ein- und ausgeschaltet. Ein weiteres Steuersignal S₅ auf einer Leitung 46 betätigt das Nebenluft-Ventil 43. Der gemessene Vakuumwert wird von dem Vakuummesser 42 als Meßsignal M₁ über eine Leitung 47 abgegeben.

Die Sauglöcher 38 sind in axial zur Aufzeichnungstrommel 9 verlaufenden Reihen ausgerichtet. Die umfangsmäßigen Abstände der Saugloch-Reihen sind in zweckmäßiger Weise an die gängigen Formatlängen der aufzuspannenden Filmfahnen angepaßt, d. h. die Abstände der Saugloch-Reihen sind so gewählt, daß Anfänge und Enden der Filmfahnen unterschiedlicher Formate jeweils im Bereich einer Saugloch-Reihe liegen.

Während der Belichtung der aufgespannten Filmfahnen durch ein Aufzeichnungsorgan 48 wird die Aufzeichnungstrommel 9 von einem Haupt-Motor 49 über einen Riemen-Antrieb angetrieben, der aus einer mit der Aufzeichnungstrommel 9 verbundenen Riemenscheibe 50, einer mit dem Haupt-Motor 49 verbundenen Riemenscheibe 51 und einem Riemen 52 besteht. Der Haupt-Motor 49 wird von einem Steuersignal S₆ auf einer Leitung 53 gesteuert.

Zur Positionierung der Aufzeichnungstrommel 9 während des Aufspannens und Abspannens der Filmfahnen ist ein verschwenkbarer Positionier-Antrieb 54 vorhanden. Der Positionier-Antrieb 54 besteht aus einem Hilfs-Motor 55 und einem vom Hilfs-Motor 55 angetriebenen Reibrad 56. Der Hilfs-Motor 55 und das Reibrad 56 sind auf einer drehbar gelagerten Trägerplatte 57 montiert, die durch ein Stellorgan 58 derart positionierbar ist, daß das Reibrad 56 entweder, wie in Fig. 1 gezeigt, an der Trommeloberfläche anliegt oder abgeschwenkt ist. Das Stellorgan 58 wird durch ein Steuersignal S₇ auf einer Leitung 59 betätigt. Der Hilfs-Motor 55 läßt sich durch ein weiteres Steuersignal S₈ auf einer Leitung 60 ein- und ausschalten.

Zum Andrücken der Filmfahnen an die Aufzeichnungstrommel 9 ist eine verschwenkbare Andruck-Vorrichtung 61 vorgesehen, die in dem Bereich angeordnet ist, in dem jeweils der Anfang der aufzuspannenden Filmfahne die Trommeloberfläche berührt. Die Andruck-Vorrichtung 61 besteht aus einer Andruckrolle 62, die an einem um einen ortsfesten Drehpunkt schwenkbaren Hebel 63 drehbar gelagert ist, und einem Stellorgan 64. Das Stellorgan 64, das durch ein Steuersignal S₉ auf einer Leitung 65 aktiviert wird, verschwenkt den Hebel 63 derart, daß die Andruckrolle 62 entweder an der Trommeloberfläche anliegt oder die dargestellte Ruhestellung einnimmt.

Zum Abheben der belichteten Filmfahnen von der Aufzeichnungstrommel 9 ist eine ebenfalls verschwenkbare Abhebe-Vorrichtung 66 vorgesehen, die in dem Bereich des Dunkelraumes 1 angeordnet ist, in dem die belichteten Filmfahnen durch eine schlitzförmige Filmaustritts-Öffnung 67 aus dem Dunkelraum 1 transportiert werden. Die Abhebe-Vorrichtung 66 weist einen Abhebefinger 68 auf, der an einem um einen ortsfesten Drehpunkt verschwenkbaren Hebel 69 befestigt ist. Mittels eines weiteren Stellorgans 70 läßt sich der Hebel 69 so verschwenken, daß der Abhebefinger 68 in eine nicht sichtbare Umfangsnut in der Aufzeichnungstrommel 9 eintaucht. Das Stellorgan 70 wird durch ein Steuersignal S₁₀ auf einer Leitung 71 betätigt.

Die Abhebe-Vorrichtung 66 weist ferner einen Leitkanal 72 auf, durch den die belichteten und von der Aufzeichnungstrommel 9 mittels des Abhebefingers 68 abgehobenen Filmfahnen zu einem Transport-Rollenpaar 73 im Bereich der Filmaustritts-Öffnung 67 geleitet werden. Das Transport-Rollenpaar 73, welches die Filmfahnen aus dem Dunkelraum 1 transportiert, wird durch einen Transport-Motor 74 angetrieben, der durch ein Steuersignal S₁₁ auf einer Leitung 75 ein- und ausgeschaltet wird.

An die Filmaustritts-Öffnung 67 ist entweder eine Nehmer-Filmkassette oder der Transportkanal einer externen Filmentwicklungsstation lichtdicht anschließbar, um die durch die Filmaustritts-Öffnung 67 transportierten belichteten Filmfahnen aufzunehmen oder gleich weiterzuverarbeiten.

Im Dunkelraum 1 ist vor der Filmaustritts-Öffnung 67 eine Lichtschranke 76 angeordnet, mit deren Hilfe der Transport der belichteten Filmfahnen aus dem Dunkelraum 1 überwacht, gegebenenfalls der Antrieb des Transportkanals der externen Entwicklungsstation gestartet und das Aufspannen der nächsten Filmfahne freigegeben wird.

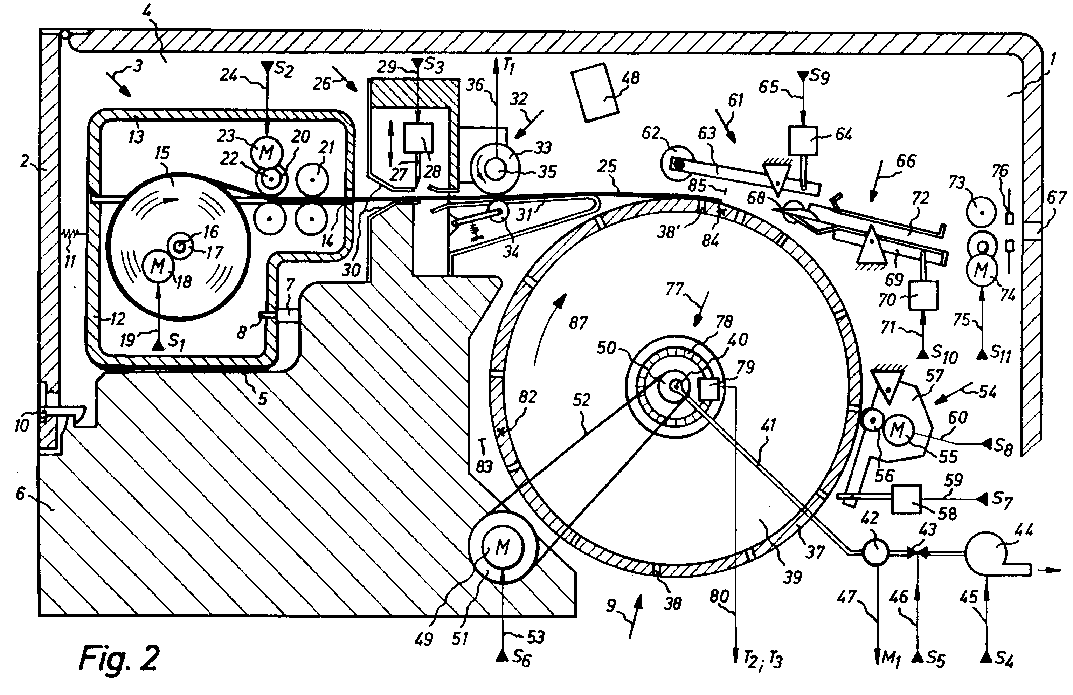

Vor dem Aufspannen, der Belichtung und dem Abspannen der Filmfahnen muß die Aufzeichnungstrommel 9 mittels des Positionier-Antriebs 54 in definierte Umfangspositionen gedreht werden. Solche definierten Umfangspositionen sind die Aufspann-Startposition, die Belichtungs-Startposition und die Abspann-Startposition, die im Zusammenhang mit der Beschreibung der Wirkungsweise der Vorrichtung anhand der Fig. 2 bis 7 näher definiert werden sollen sowie eine Referenz-Position der Aufzeichnungstrommel 9.

Zum Feststellen der jeweiligen Umfangsposition der Aufzeichnungstrommel 9 ist ein Positions-Geber 77 vorgesehen, der beispielsweise aus einer an der Aufzeichnungstrommel 9 befestigten Rasterscheibe 78 und einem ortsfesten optoelektronischen Abtaster 79 besteht. Der Abtaster 79 erzeugt durch Abtasten der Rasterscheibe 78 auf einer Leitung 80 einen Umfangsimpuls T₂ pro Umdrehung der Aufzeichnungstrommel 9 und eine laufende Zähltaktfolge T₃, deren Taktzahl ein Maß für die jeweilige Umfangsposition der Aufzeichnungstrommel 9 ist.

In der Referenz-Position der Aufzeichnungstrommel 9 ist eine an der Aufzeichnungstrommel 9 befestigte Referenzmarke 82 mit einer ortsfesten Referenzmarke 83 in Deckung. Die Rasterscheibe 78 ist so justiert, daß der Umfangsimpuls T2 jeweils dann abgegeben wird, wenn sich die Aufzeichnungstrommel 9 in der Referenz-Position befindet.

Der Umfangsimpuls T₂ und die Zähltaktfolge T₃ auf der Leitung 80 sowie die Meßtaktfolge T₁ auf der Leitung 36 und das Meßsignal M₁ auf der Leitung 47 werden einer nicht dargestellten Steuer-Schaltung zugeführt, in der sämtliche Steuersignale S₁ bis S₁₁ erzeugt werden.

Zur Festlegung der Aufspann-Startposition, der Belichtungs-Startposition und der Abspann-Startposition enthält die Steuer-Schaltung mehrere Positions-Zähler,.in welche die Zähltaktfolge T₃ eingezählt wird und die durch den Umfangsimpuls T₂ rückgesetzt werden, so daß die momentan gezählte Taktzahl während einer Umdrehung die momentane Umfangsposition der Aufzeichnungstrommel, ausgehend von der Referenz-Position, angibt.

Die Steuer-Schaltung enthält außerdem mehrere Positions-Speicherregister, in die die der Aufspann-Startposition, der Belichtungs-Startposition und der Abspann-Startposition entsprechenden Taktzahlen eingegeben und gespeichert werden. Die gespeicherten Taktzahlen und die in den Positions-Zählern eingezählten Taktzahlen werden laufend miteinander verglichen und bei Gleichheit entsprechende Signale erzeugt, welche das Erreichen der jeweiligen Umfangspositionen signalisieren.

Die Steuer-Schaltung enthält ferner mehrere Längen-Zähler, in die die Meßtaktfolge T₁ von der Filmlängen-Meßvorrichtung 32 eingezählt wird, und entsprechende Längen-Speicherregister, in denen vorgegebene Längen als Taktzahlen gespeichert werden.

Diese gespeicherten Taktzahlen werden wiederum mit den gezählten Taktzahlen der Meßtaktfolge T1 verglichen, um das Erreichen der vorgegebenen Länge zu signalisieren.

Die vorgegebenen Längen sind die jeweilige Länge L₁ der von der Filmbahn 25 abzuschneidenden Filmfahne, der gerätebedingte konstante Abstand L₂ des Schneidepunktes unter dem Schneidemesser 27 der Schneide-Vorrichtung 26 von dem Meßpunkt unter dem Meßrad 33 der Filmlängen-Meßvorrichtung 32 in der Filmbahn-Ebene, der ebenfalls konstante Abstand L₃ vom Meßpunkt zu einer Aufspann-Marke auf der Aufzeichnungstrommel 9, wenn diese sich in der Aufspann-Position befindet, sowie die Länge L₄ einer zu bildenden Filmschlaufe.

Nachdem der Aufbau der Vorrichtung anhand der Fig. 1 beschrieben wurde, soll nun die Betriebsweise der Vorrichtung in den einzelnen Phasen des Auf- und Abspannens der Filmfahnen anhand der Fig. 2 bis 7 näher erläutert werden.

Nachdem die Länge L₁ der momentan von der Filmbahn 25 abzuschneidenden bzw. zu belichtenden Filmfahne in das entsprechende Längen-Speicherregister der Steuer-Schaltung eingegeben wurde, wird die Aufzeichnungstrommel 9 zunächst mit Hilfe des Positionier-Antriebs 54 in die Aufspann-Startposition gedreht und die Filmbahn 25 bis zu einer Aufspann-Marke 84 der Aufzeichnungstrommel 9 transportiert, was in Fig. 2 dargestellt ist.

Die Aufspann-Marke 84 markiert diejenige Mantellinie der Aufzeichnungstrommel 9, auf der jeweils der Anfang der zur Aufzeichnungstrommel 9 transportierten Filmbahn 25 liegen soll. Diese Aufspann-Marke 84 ist in zweckmäßiger Weise in der Nähe einer Saugloch-Reihe 38' angebracht, so daß jeweils der Anfangsbereich der Filmbahn 25 über der Saugloch-Reihe 38' liegt und an die Trommeloberfläche angesaugt wird.

In der Aufspann-Startposition der Aufzeichnungstrommel 9 ist die Aufspann-Marke 84 mit einer gedachten ortsfesten Bezugsmarke 85 in Deckung. Die Aufspann-Startposition ist so gewählt, daß die Aufspann-Marke 84 im Bereich der Andruckrolle 62 liegt, in dem der Anfang der durch die Leitfläche 31 zur Aufzeichnungstrommel 9 geführten Filmbahn 25 mit der Trommeloberfläche in Berührung kommt.

Um die Aufzeichnungstrommel 9 in diese Aufspann-Startposition zu drehen, wird der Hilfs-Motor 55 durch das Steuersignal S₈ auf der Leitung 60 gestartet, die Umfangspositionen durch den Positions-Geber 77 festgestellt, und der Hilfs-Motor 55 bei Erreichen der Aufspann-Startposition wieder gestoppt. Das Reibrad 56 des Positionier-Antriebs 54 bleibt angeschwenkt, um die Aufzeichnungstrommel 9 in der Aufspann-Startposition festzuhalten.

Danach wird der Filmtransport-Motor 23 durch das Steuersignal S2 auf der Leitung 24 eingeschaltet und die Filmbahn 25 mittels des Filmtransport-Rollenpaares 22 durch das Dichtungs-Rollenpaar 21, die Film-Schneidevorrichtung 26 und die Filmlängen-Meßvorrichtung 32 und über die Leitfläche 31 zur Aufzeichnungstrommel 9 transportiert. Bei Eintritt des Anfangs der Filmbahn 25 in die Filmlängen-Meßvorrichtung 32 beginnt diese, die durchlaufene Filmlänge zu messen. Wenn die gemessene Länge der Filmbahn 25 gleich dem konstanten Abstand L₃ zwischen Meßpunkt und Aufspann-Marke 84 auf der Aufzeichnungstrommel 9 ist, wird der Filmtransport-Motor 23 gestoppt. Dann befindet sich der Anfang der Filmbahn 25, wie in Fig. 2 dargestellt, an der Aufspann-Marke 84 und der Anfangsbereich der Filmbahn 25 über der Saugloch-Reihe 38'.

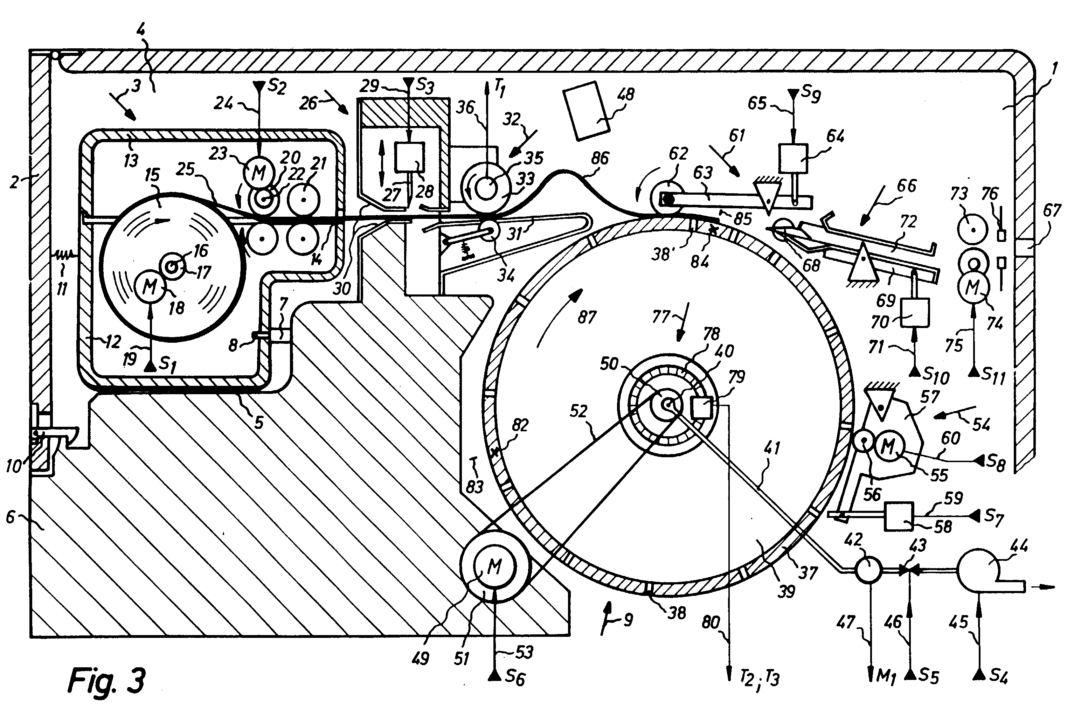

Nach dem Transport der Filmbahn 25 zur Aufspann-Marke 84 wird, wie in Fig. 3 gezeigt, die Andruckrolle 62 der Andruck-Vorrichtung 61 durch das Steuersignal S₉ auf der Leitung 65 abgesenkt, wodurch der Anfangsbereich der Filmbahn 25 an die Trommeloberfläche angedrückt wird. Jetzt wird das Vakuum durch Einschalten der Vakuum-Pumpe 44 mit dem Steuersignal S₄ auf der Leitung 45 aufgebaut und der Anfangsbereich der Filmbahn 25 auf der Trommeloberfläche durch das Vakuum fixiert. Dabei ist das Nebenluft-Ventil 43 geschlossen, so daß das Vakuum mit seinem vollen Nennwert wirksam wird. Das Erreichen des vollen Nennwertes wird mit Hilfe des Vakuummessers 42 überprüft, indem das Meßsignal M₁ auf der Leitung 47 in der Steuer-Schaltung mit einem Soll-Nennwert verglichen wird.

Sollte sich bei der Messung des Vakuums herausstellen, daß der Vakuum-Nennwert nicht erreicht wurde, wird der bisherige Ablauf rückgängig gemacht, indem die Andruckrolle 62 angehoben, das Vakuum abgeschaltet und die Filmbahn 25 mit Hilfe des Filmtransport-Motors 23 wieder in die Rollfilm-Kassette 3 zurücktransportiert wird, bis der Anfang der Filmbahn 25 die in Fig. 1 gezeigte Position zwischen dem Filmtransport-Rollenpaar 22 erreicht hat. Beim Rückspulen der Filmbahn 25 in die Rollfilm-Kassette 3 wird gleichzeitig der Wickel-Motor 18 durch das Steuersignal S₁ auf der Leitung 19 gestartet, welcher die rücktransportierte Filmbahn 25 wieder auf die Filmrolle 15 aufwickelt.

Wird bei der Überprüfung des Vakuums festgestellt, daß der volle Vakuum-Nennwert erreicht ist, beginnt die Bildung einer Filmschlaufe 86 in der Filmbahn 25, indem der Filmtransport-Motor 23 erneut gestartet und ein weiteres Stück der Filmbahn 25 aus der Rollfilm-Kassette 3 transportiert wird. Da der Anfang der Filmbahn 25 durch das Vakuum und durch die Andruckrolle 62 auf der in der Aufspann-Startposition arretierten Aufzeichnungstrommel 9 festgehalten wird, staut sich die Filmbahn 25 und bildet die Filmschlaufe 86. Die Länge der während der Schlaufenbildung durch die Filmlängen-Meßvorrichtung 32 transportierten Filmbahn 25 wird gemessen, und wenn die gemessene Länge mit der zuvor in die Steuer-Schaltung eingegebenen Länge L₄ der Filmschlaufe 86 übereinstimmt, wird der Filmtransport-Motor 23 wieder gestoppt. Zu diesem Zeitpunkt hat die Filmlängen-Meßvorrichtung 32 eine Filmlänge L₃ + L₄ gemessen.

Nach der Bildung der Filmschlaufe 86 wird das Nebenluft-Ventil 43 durch das Steuersignal S₅ auf der Leitung 46 geöffnet und das Vakuum auf einen reduzierten Wert abgesenkt. Auch das reduzierte Vakuum wird mit dem Vakuummesser 42 gemessen und mit einem reduzierten Soll-Nennwert verglichen. Sollte sich herausstellen, daß das reduzierte Vakuum nicht erreicht wurde, wird der bisherige Ablauf, wie bereits beschrieben, ebenfalls rückgängig gemacht und die Filmbahn 25 zurück in die Rollfilm-Kassette 3 transportiert.

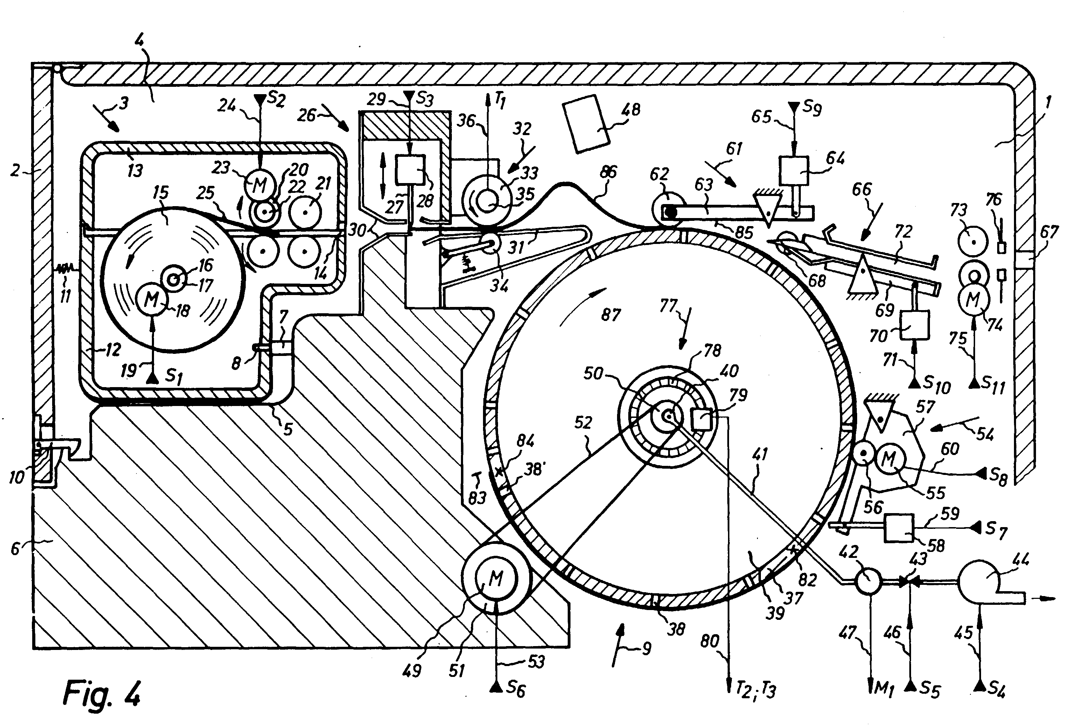

Wird der reduzierte Soll-Nennwert für das Vakuum erreicht, beginnt das Aufspannen der Filmbahn 25 bzw. der Filmfahne 25' nach dem Schneidevorgang auf die Aufzeichnungstrommel 9, was in Fig. 4 dargestellt ist.

Durch das Steuersignal S₈ auf der Leitung 60 wird der Hilfs-Motor 55 des Positionier-Antriebes 54 und durch das Steuersignal S₂ auf der Leitung 24 der FilmtransportMotor 23 gestartet. Durch Drehen der Aufzeichnungstrommel 9 in Richtung eines Pfeiles 87 legt sich die Filmbahn 25 um die Aufzeichnungstrommel 9, wobei der der jeweiligen Umschlingung entsprechende Teil der Filmbahn 25 durch die Saugloch-Reihen auf der Trommeloberfläche fixiert wird. Die Drehgeschwindigkeit der Aufzeichnungstrommel 9 und die Transportgeschwindigkeit der Filmbahn 25 sind so aufeinander abgestimmt, daß die Größe der Filmschlaufe 86 beim Aufspannen annähernd erhalten bleibt.

Beim Aufspannen schiebt der Filmtransport-Motor 23 die Filmbahn 25 so lange nach, bis die Filmlängen-Meßvorrichtung 32 eine insgesamt durchlaufene Filmlänge festgestellt hat, die der zuvor eingegebenen Länge L₁ der aufzuspannenden Filmfahne minus dem konstanten Abstand L₄ zwischen Schneide- und Meßpunkt entspricht. Zu diesem Zeitpunkt liegt das Ende der von der Filmbahn 25 abzuschneidenden Filmfahne 25' im Schneidepunkt unter dem Schneidemesser 27 der Film-Schneidevorrichtung 26. Der Filmtransport-Motor 23 und der Hilfs-Motor 55 des Positionier-Antriebes 54 werden gestoppt und die Filmfahne 25' durch den Steuerbefehl S₃ auf der Leitung 29 durch das Schneidemesser 27 von der Filmbahn 25 abgetrennt. Nach dem Filmschnitt läuft der Filmtransport-Motor 23 mit umgekehrter Drehrichtung an und transportiert die Filmbahn 25 wieder in die Rollfilm-Kassette 3 zurück, bis die Schnittkante, wie in Fig. 4 gezeigt, zwischen dem Filmtransport-Rollenpaar 22 liegt, womit die Filmbahn 25 für einen weiteren Aufspannvorgang vorbereitet ist.

Nach dem Filmschnitt läuft auch der Hilfs-Motor 55 des Positionier-Antriebs 54 wieder an, und die Aufzeichnungstrommel 9 dreht sich zum Aufspannen der gesamten Filmfahne 25' weiter in Richtung des Pfeiles 87, wobei die aufgespannte Filmfahne 25' durch das reduzierte Vakuum auf die Trommeloberfläche fixiert wird.

Durch die Filmschlaufe 86 wird eine Entkopplung des Filmtransports von der Drehbewegung der Aufzeichnungstrommel 9 erreicht, wodurch in vorteilhafter Weise Taumelfehler der Rollfilm-Kassette, schiefes Aufspannen der Filmfahne 25' auf der Aufzeichnungstrommel 9 sowie Verzug und Faltenbildung innerhalb der Filmfahne 25' vermieden werden. Hinzu kommt, daß durch die Filmschlaufe 86 der Anfangsbereich der Filmfahne 25' versteift wird, so daß eine sichere Fixierung des Anfangsbereiches gewährleistet ist. Durch die Absenkung des Vakuums während des Aufspannens wird die Neigung der Filmfahne zu Faltenbildung und Schiefzug weiter gemindert und eine spannungsfreie Aufspannung gewährleistet.

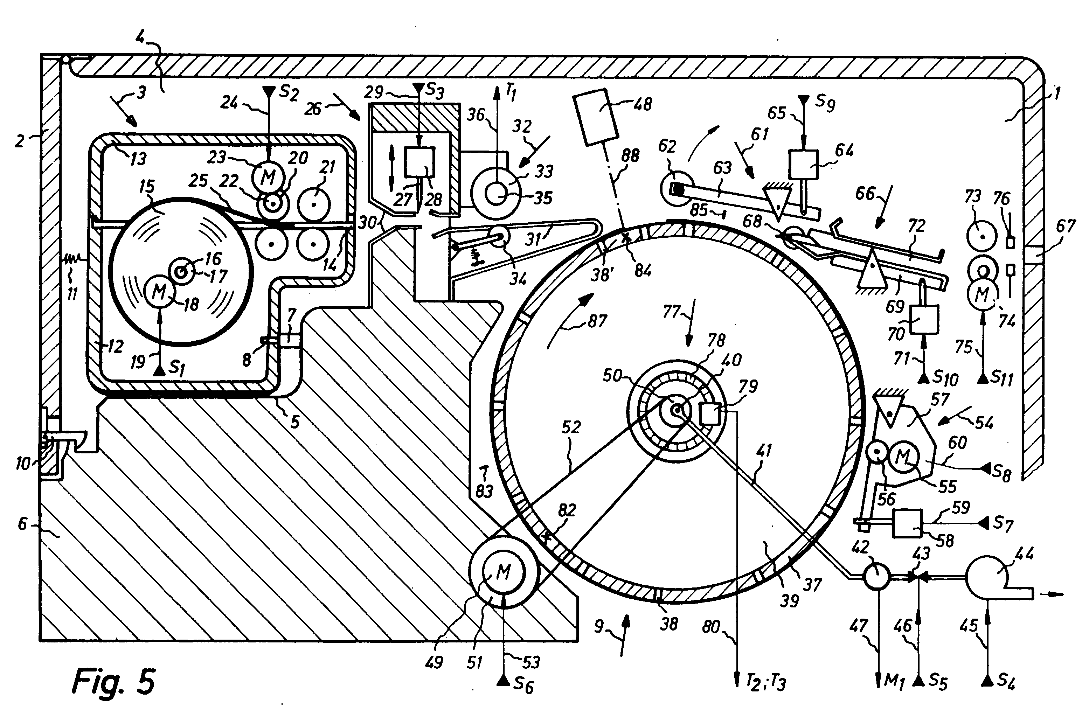

Wenn sich die Aufzeichnungstrommel 9 in der Belichtungs-Startposition befindet, die in Fig. 5 dargestellt ist, wird der Hilfs-Motor 55 des Positionier-Antriebs 54 gestoppt. In der Belichtungs-Startposition befindet sich die Aufspann-Marke 84 an der Aufzeichnungstrommel 9 in der optischen Achse 88 des Aufzeichnungsorgans 48. In der Belichtungs-Startposition der Aufzeichnungstrommel 9 wird das Reibrad 56 des Positionier-Antriebs 54 und die Andruckrolle 62 der Andruck-Vorrichtung 61 durch die Steuersignale S₈ und S₉ auf den Leitungen 60 und 65 von der Oberfläche der Aufzeichnungstrommel 9 abgehoben. Gleichzeitig wird das Vakuum durch Schließen des Nebenluft-Ventils 43 mit dem Steuersignal S5 auf der Leitung 46 auf den vollen Nennwert angehoben. Ergibt die Vakuum-Überwachung mit dem Vakuummesser 42, daß der Nennwert auch tatsächlich erreicht ist, startet der Haupt-Motor 49 durch das Steuersignal S₆ auf der Leitung 53 und dreht die Aufzeichnungstrommel 9 während der Belichtung der aufgespannten Filmfahne 25' durch das Aufzeichnungsorgan 48.

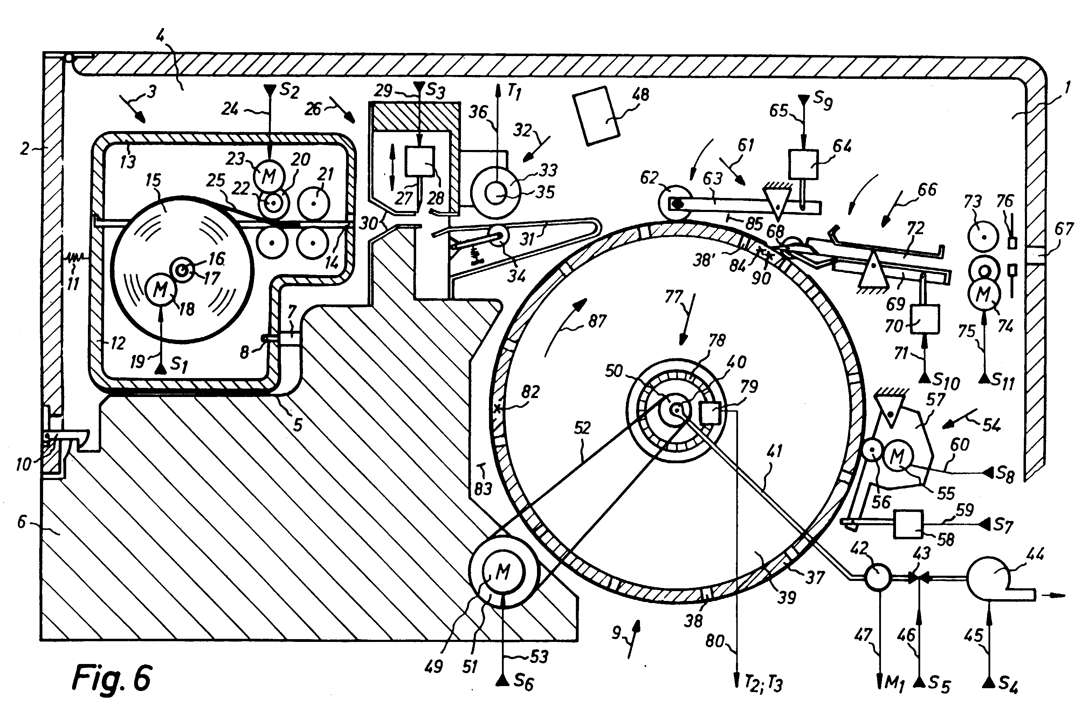

Nach der Belichtung der Filmfahne 25' und Abbremsung der Aufzeichnungstrommel 9 wird der Abspann-Vorgang eingeleitet, der in Fig. 6 dargestellt ist.

Das Reibrad 56 des Positionier-Antriebes 54 wird durch den Steuerbefehl S₇ auf der Leitung 59 wieder auf die Oberfläche der Aufzeichnungstrommel 9 abgesenkt, der Hilfs-Motor 55 des Positionier-Antriebes 54 wird durch das Steuersignal S₈ auf der Leitung 60 eingeschaltet und die Aufzeichnungstrommel 9 in Richtung des Pfeiles 87 in die Abspann-Startposition gedreht. In der Abspann-Startposition befindet sich eine feste Abspann-Marke 90 an der Aufzeichnungstrommel 9 unter der Spitze des Abhebefingers 68 der Abhebe-Vorrichtung 66. Die Abspann-Marke 90 liegt in dem Bereich der Trommeloberfläche, der nicht von der aufgespannten Filmfahne 25' bedeckt sein darf, damit der Abhebefinger 68 mit Sicherheit zwischen Anfang und Ende der aufgespannten Filmfahne 25' in die nicht dargestellte Umfangsnut der Aufzeichnungstrommel 9 eintauchen kann. Daraus ergibt sich die Forderung, daß die maximal mögliche Länge einer aufzuspannenden

Filmfahne 25' um den genannten Bereich kürzer als die Umfangslänge der Aufzeichnungstrommel 9 sein muß. Die Abspann-Startposition wird unabhängig von der jeweiligen Länge der aufgespannten Filmfahne 25' eingenommen.

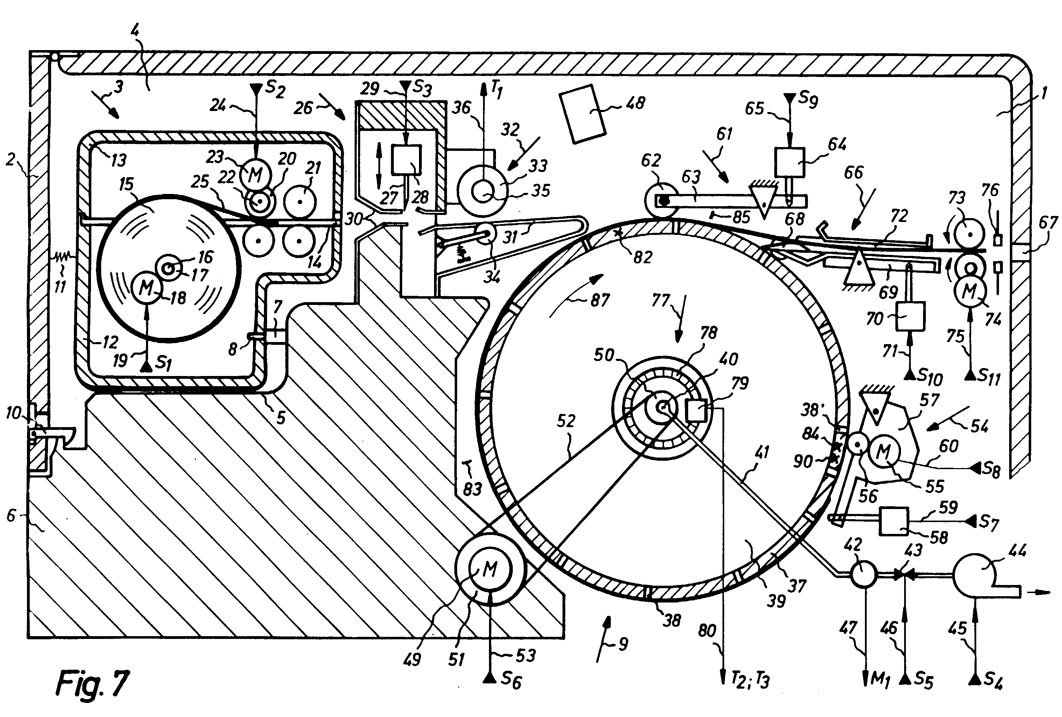

In der Abspann-Startposition wird die Andruckrolle 62 der Andruck-Vorrichtung 61 durch das Steuersignal S₉ auf die Leitung 65 und der Abhebefinger 68 der Abhebe-Vorrichtung 66 durch das Steuersignal S₁₀ auf der Leitung 71, wie in Fig. 6 dargestellt, abgesenkt sowie der Transport-Motor 74 durch das Steuersignal S₁₁ auf der Leitung 75 gestartet und dadurch das Filmtransport-Rollenpaar 73 in Rotation versetzt. Danach wird der Hilfs-Motor 55 des Positionier-Antriebes 54 erneut durch das Steuersignal S₈ auf der Leitung 60 gestartet und die Aufzeichnungstrommel 9 weiter in Richtung des Pfeiles 87 gedreht. Durch die Drehung der Aufzeichnungstrommel 9 schält der Abhebefinger 68 die belichtete Filmfahne 25' von der Trommeloberfläche unter vollem Vakuum ab. Durch die Drehung der Aufzeichnungstrommel 9 wird die belichtete Filmfahne 25', wie in Fig. 7 gezeigt, durch den Leitkanal 72 der Abhebe-Vorrichtung 66 geschoben, bis sie von dem Transport-Rollenpaar 73 erfaßt und durch die Filmaustritts-Öffnung 67 aus der Dunkelkammer 1 heraustransportiert wird. Der Transport-Motor 74 ist mit einem Freilauf ausgestattet, durch den in vorteilhafter Weise eine Geschwindigkeitsanpassung zwischen der Drehbewegung der Aufzeichnungstrommel 9 und der Drehbewegung des Filmtransport-Rollenpaares 73 vorgenommen wird.

## Patentansprüche

1. Vorrichtung zum automatischen Aufspannen von Filmmaterial auf eine Aufzeichnungstrommel eines Reproduktionsgerätes und zum Abspannen des durch ein Aufzeichnungsorgan belichteten Filmmaterials von der Aufzeichnungstrommel, die sich in einem lichtdichten Raum (1) des Reproduktionsgerätes befindet, bestehend aus
a) einer das Filmmaterial als drehbare Filmrolle (15) enthaltenden und mit einer schlitzförmigen, lichtdicht schließenden Filmdurchtritts-Öffnung (14) versehenen Rollfilm-Kassette (3), welche in dem lichtdichten Raum (1) einbringbar und dort arretierbar ist, wobei die Filmdurchtritts-Öffnung (14) zur Aufzeichnungstrommel (9) weist und axial zu dieser verläuft,
b) einer zwischen der Filmdurchtritts-Öffnung (14) der Rollfilm-Kassette (3) und der Aufzeichnungstrommel (9) angeordneten Transport- und Leitfläche (30; 31), welche im Bereich der Aufzeichnungstrommel (9) im wesentlichen tangential zu dieser verläuft, für die von der Filmrolle (15) abgewickelte Filmbahn (25),
c) Film-Transportmitteln (22;23) zum Transport der Filmbahn (25) aus der Rollfilm-Kassette (3) und zur Aufzeichnungstrommel (9),
d) einer zwischen der Rollfilm-Kassette (3) und der Aufzeichnungstrommel (9) angeordneten Film-Schneidevorrichtung (26) zum Abtrennen eines jeweils zu belichtenden Filmblattes (25') vorgegebener Länge von der Filmbahn (25),
e) einer zwischen der Rollfilm-Kassette (3) und der Aufzeichnungstrommel (9) angeordneten Filmlängen-Meßvorrichtung (32) zur Feststellung der jeweils durchlaufenen Länge der Filmbahn (25),
f) einer Andruck-Vorrichtung (61) mit Andruckrolle (62), die in demjenigen Bereich an die Aufzeichnungstrommel (9) anschwenkbar ist, in dem der Anfang der über die Transport und Leitfläche (30;31) zur Aufzeichnungstrommel (9) transportierten Filmbahn (25) mit der Trommeloberfläche in Berührung kommt,
g) einem Positionier-Antrieb (54) zum Drehen der Aufzeichnungstrommel (9) in eine Aufspann-, Belichtungs- und Abspann-Startposition,
h) einer Abhebe-Vorrichtung (66) mit einem an die Aufzeichnungstrommel (9) schwenkbaren Abhebefinger (68) zum Abschälen des jeweils belichteten Filmblattes von der Aufzeichnungstrommel (9), und
j) Saugloch-Reihen (38') in der Mantelfläche der Aufzeichnungstrommel (9), die axial zurTrommelachse verlaufen und an eine ortsfeste Vakuum-Pumpe (44) anschließbar sind zur Vakuum-Fixierung des Filmblattes (25') auf der Aufzeichnungstrommel (9).

2. Vorrichtung nach Anspruch 1, dadurch gekennzeichnet, daß in die Saugleitung (41) ein steuerbares Nebenluft-Ventil (43) eingeschaltet ist zur Reduzierung des Vakuums während des Auf- und/oder Abspannens des Filmmaterials.

3. Vorrichtung nach Anspruch 1 oder 2, dadurch gekennzeichnet, daß die Rollfilm-Kassette (4) zur Lichtabdichtung im Bereich der Filmdurchtritts-Öffnung (14) oberhalb und unterhalb der Filmbahn (25) angeordnete Dichtungsrollen (21) aufweist, deren Länge mindestens der Länge der Filmdurchtritts-Öffnung (14) entspricht.

4. Vorrichtung nach einem der Ansprüche 1 bis 3, dadurch gekennzeichnet, daß die Film-Transportmittel (22;23) aus in der Rollfilm-Kassette (3) oberhalb und unterhalb der Filmbahn (25) angeordneten Transportrollen (22) bestehen, von denen mindestens eine durch einen Filmtransport-Motor (23) antreibbar ist.

5. Vorrichtung nach Anspruch 4, dadurch gekennzeichnet, daß
a) der Filmtransport-Motor (23) ortsfest am Geräteträger (6) des Reproduktionsgerätes befestigt ist, und
b) die angetriebene Transportrolle (22) durch die Wandung der Rollfilm-Kassette (3) mit dem Filmtransport-Motor (23) verbindbar ist.

6. Vorrichtung nach einem der Ansprüche 1 bis 5, dadurch gekennzeichnet, daß die Welle (16) der Filmrolle (15) in der Rollfilm-Kassette (3) mit einem Wickel-Motor (18) koppelbar ist, um die abgewickelte Filmbahn (25) gegebenenfalls wieder in die Rollfilm-Kassette (3) zurückzutransportieren und auf die Filmrolle (15) aufzuwickeln.

7. Vorrichtung nach einem der Ansprüche 1 bis 6, dadurch gekennzeichnet, daß durch ständige Erregung des Wickel-Motors (18) ein Gegendrehmoment zu dem Drehmoment des Filmtransport-Motors (23) erzeugbar ist, um die Filmbahn (25) zwischen Filmrolle (15) und Transportrollen (22) zu spannen.

8. Vorrichtung nach einem der Ansprüche 1 bis 7, dadurch gekennzeichnet, daß die Rollfilm-Kassette (3) aus einem Unterteil (12) und einem abnehmbaren lichtdicht schließenden Deckel (13) besteht.

9. Vorrichtung nach einem der Ansprüche 1 bis 8, dadurch gekennzeichnet, daß jeweils eine Rolle des Dichtungs-Rollenpaares (21) und des Transport-Rollenpaares (22) im Unterteil (12) der Rollfilm-Kassette (3) und jeweils die andere Rolle im Deckel (13) gelagert ist.

10. Vorrichtung nach einem der Ansprüche 1 bis 9, dadurch gekennzeichnet, daß der lichtdichte Raum (1) des Reproduktionsgerätes eine lichtdicht schließende und verriegelbare Ladeklappe (2) zum Einbringen der Rollfilm-Kassette (3) aufweist.

11. Vorrichtung nach einem der Ansprüche 1 bis 10, dadurch gekennzeichnet, daß
a) der Geräteträger (6) innerhalb des lichtdichten Raumes (1) eine Ladebühne (5) zum Absetzen der Rollfilm-Kassette (3) aufweist, und
b) Mittel (7;8; 11) zum Ausrichten der Rollfilm-Kassette (3) bezüglich der Aufzeichnungstrommel (9) und zum Arretieren der Rollfilm-Kassette (3) am Geräteträger (6) vorhanden sind.

12. Vorrichtung nach einem der Ansprüche 1 bis 11, dadurch gekennzeichnet, daß die Film-Schneidevorrichtung (26) für die Filmbahn (25) als Schlagmesser ausgebildet ist.

13. Vorrichtung nach einem der Ansprüche 1 bis 11, dadurch gekennzeichnet, daß die Film-Schneidevorrichtung (26) für die Filmbahn (25) als Kreismesser ausgebildet ist, das rotierend entlang der Schnittlinie quer zur Filmbahn (25) bewegbar ist.

14. Vorrichtung nach einem der Ansprüche 1 bis 13, dadurch gekennzeichnet, daß die Filmlängen-Meßvorrichtung (32) aus einem durch die Bewegung der Filmbahn (25) angetriebenen Meßrad (33), einem die Filmbahn (25) an das Meßrad federnd andrückenden Stützrad (34) und aus einem mit dem Meßrad (33) gekoppelten Drehimpulsgeber (35) besteht, welcher die Rotation des Meßrades (33) in eine Taktfolge umsetzt, wobei die Anzahl der Takte ein Maß für die gemessene Filmlänge ist.

15. Vorrichtung nach einem der Ansprüche 1 bis 14, dadurch gekennzeichnet, daß der Positionier-Antrieb (54) aus einer verschwenkbaren Trägerplatte (57), einem auf der Trägerplatte (57) drehbar gelagerten Reibrad (56) und einem auf der Trägerplatte (57) befestigten und mit dem Reibrad (56) gekoppelten Hilfs-Motor (55) besteht, wobei die Trägerplatte (57) derart verschwenkbar ist, daß das Reibrad (56) an der Aufzeichnungstrommel (9) anliegt.

16. Vorrichtung nach einem der Ansprüche 1 bis 15, dadurch gekennzeichnet, daß der lichtdichte Raum (1) im Bereich der Abhebe-Vorrichtung (66) eine schlitzförmige Filmaustritts-Öffnung (67) für die belichteten Filmblätter aufweist.

17. Vorrichtung nach einem der Ansprüche 1 bis 16, dadurch gekennzeichnet, daß die Abhebe-Vorrichtung (66) mit einem Film-Leitkanal (72) versehen ist, der in Richtung der Filmaustritts-Öffnung (67) weist, wenn der Abhebefinger (68) an die Aufzeichnungstrommel (9) angeschwenkt ist.

18. Vorrichtung nach einem der Ansprüche 1 bis 17, dadurch gekennzeichnet, daß zwischen der Abhebe-Vorrichtung (66) und der Filmaustritts-Öffnung (67) ein weiteres antreibbares Filmtransport-Rollenpaar (73) vorgesehen ist, um die belichteten Filmblätter aus dem lichtdichten Raum (1) durch die Filmaustritts-Öffnung (67) zu transportieren.

19. Vorrichtung nach einem der Ansprüche 1 bis 18, dadurch gekennzeichnet, daß mindestens eine Lichtschranke (76) zur Überwachung des Filmtransportes vorgesehen ist;

20. Vorrichtung nach einem der Ansprüche 1 bis 19, dadurch gekennzeichnet, daß an die Filmaustritts-Öffnung (67) des lichtdichten Raumes (1) eine Nehmer-Filmkassette zur Aufnahme der belichteten Filmblätter lichtdicht anschließbar ist.

21. Vorrichtung nach einem der Ansprüche 1 bis 19, dadurch gekennzeichnet, daß an die Filmaustritts-Öffnung (67) des lichtdichten Raumes (1) der Filmtransport-Kanal einer Film-Entwicklungsstation lichtdicht anschließbar ist.

22. Vorrichtung nach einem der Ansprüche 1 bis 21, dadurch gekennzeichnet, daß die Sauglöcher (38) in der Mantelfläche der Aufzeichnungstrommel (9) in axial verlaufenden Reihen angeordnet sind, wobei die umfangsmäßigen Abstände der Saugloch-Reihen an die Längen der gebräuchlichen Formate der aufzuspannenden Filmblätter angepaßt sind.

23. Vorrichtung nach einem der Ansprüche 1 bis 22, dadurch gekennzeichnet, daß in die Saugleitung (41) ein Vakuummesser (42) zur Vakuum-Überwachung eingeschaltet ist, der ein elektrisches Meßsignal abgibt.

24. Vorrichtung nach einem der Ansprüche 1 bis 23, dadurch gekennzeichnet, daß die Aufzeichnungstrommel (9) eine erste Umfangsmarke (Aufspann-Marke) aufweist, welche diejenige Mantellinie kennzeichnet, auf der jeweils der Anfang eines aufzuspannenden Filmblattes auf der Aufzeichnungstrommel (9) in der Aufspann-Startposition fixiert wird.

25. Vorrichtung nach einem der Ansprüche 1 bis 24, dadurch gekennzeichnet, daß die Aufzeichnungstrommel (9) eine zweite Umfangsmarke (Abspann-Marke) aufweist, welche diejenige Mantellinie kennzeichnet, auf der der Abhebefinger (68) der Abhebe-Vorrichtung (66) jeweils auf die Aufzeichnungstrommel (9) in der Abspann-Startposition abgesenkt wird.

26. Vorrichtung nach einem der Ansprüche 1 bis 25, dadurch gekennzeichnet, daß
a) die maximale Länge eines aufzuspannenden Filmblattes kleiner als die Umfangslänge der Aufzeichnungstrommel (9) ist und
b) die zweite Umfangsmarke (Abspann-Marke) in dem von dem aufgespannten Filmblatt maximaler Länge nicht bedeckten Mantelbereich der Aufzeichnungstrommel (9) angeordnet ist.

27. Vorrichtung nach einem der Ansprüche 1 bis 26, dadurch gekennzeichnet, daß die Welle der Aufzeichnungstrommel (9) mit einem Positions-Geber (77) zur Markierung der Aufspann-, Belichtungs- und Abspann-Startposition der Aufzeichnungstrommel (9) verbunden ist.

28. Betriebsweise einer Vorrichtung zum automatischen Aufspannen von Filmmaterial auf eine in einem lichtdichten Raum angeordnete Aufzeichnungstrommel eines Reproduktionsgerätes und zum Abspannen des durch ein Aufzeichnungsorgan belichteten Filmmaterials von der Aufzeichnungstrommel, die in der Mantelfläche axial zur Trommelachse verlaufende und über eine Saugleitung an eine ortsfeste Vakuum-Pumpe anschließbare Saugloch-Reihen aufweist, bei der
a) die Aufzeichnungstrommel (9) mittels eines Positionier-Antriebes (54) in eine Aufspann-Startposition gedreht wird,
b) Filmtransport-Mittel (22;23) gestartet werden und die Filmbahn (25) von einer Filmrolle (15) einer Rollfilm-Kassette (3) abgewickelt und über eine Transport- und Leitfläche (30;31) zur Aufzeichnungstrommel (9) transportiert wird,
c) die Filmtransport-Mittel (22;23) gestoppt werden, wenn der Anfang der transportierten Filmbahn (25) in der Aufspann-Startposition im Bereich einer Andruckrolle (62) einer Andruck-Vorrichtung (61) und im Bereich einer Saugloch-Reihe (38') der Aufzeichnungstrommel (9) liegt,
d) die Andruckrolle (62) der Andruck-Vorrichtung (61) zum Andrücken des Anfangs der Filmbahn (25) auf die Aufzeichnungstrommel (9) abgesenkt und der Anfang der Filmbahn (25) durch Beaufschlagen der Saugloch-Reihe (38') mit Vakuum auf der Aufzeichnungstrommel (9) fixiert wird,
e) die Filmtransport-Mittel (22;23) und der Positionier-Antrieb (54) zum Drehen der Aufzeichnungstrommel (9) gestartet werden und weitere Filmbahn (25) zur Aufzeichnungstrommel (9) transportiert und aufgespannt wird,
f) beim Aufspannen der Filmbahn (25) die Filmbahnlänge in einer Filmlängen-Meßvorrichtung (32) gemessen wird und die Filmtransport-Mittel (22;23) sowie der Positionier-Antrieb (54) gestoppt werden, wenn das Ende des von der Filmbahn (25) abzuschneidenden Filmblattes (25') vorgegebener Länge unter der Film-Schneidevorrichtung (26) liegt,
g) das Filmblatt (25') von der Filmbahn (25) durch die Film-Schneidevorrichtung (26) abgeschnitten, der restliche Teil des Filmblattes (25') mittels des Positionier-Antriebes (54) auf die Aufzeichnungstrommel (9) aufgespannt und dann die Andruckrolle (62) der Andruck-Vorrichtung (61) von der Aufzeichnungstrommel (9) abgehoben wird,
h) das aufgespannte Filmblatt (25') durch das Aufzeichnungsorgan (48) punkt- und zeilenweise belichtet wird,
i) die Aufzeichnungstrommel (9) nach der Belichtung durch den Positionier-Antrieb (54) in eine Abspann-Startposition gedreht wird, in der Abspann-Startposition die Andruckrolle (62) der Andruck-Vorrichtung (61) und ein Abhebefinger (68) einer Abhebe-Vorrichtung (66) auf die Aufzeichnungstrommel (9) abgesenkt werden, und
j) das belichtete Filmblatt (25') durch Drehen der Aufzeichnungstrommel (9) mittels des abgesenkten Abhebefingers (68) von der Trommeloberfläche abgeschält wird.

29. Betriebsweise der Vorrichtung nach Anspruch 28, dadurch gekennzeichnet, daß
a) nach dem Fixieren des Anfangs der Filmbahn (25) auf der Aufzeichnungstrommel (9) nur die Filmtransport-Mittel (22; 23) gestartet werden und durch Nachschieben zusätzlicher Filmbahn (25) aus der Rollfilm-Kassette (3) im Anfangsbereich der Filmbahn (25) eine Filmschlaufe vorgegebener Länge gebildet wird, und
b) nach Bildung der Filmschlaufe (86) der Positionier-Antrieb (54) zur Drehung der Aufzeichnungstrommel (9) gestartet und weitere Filmbahn (25) unter Beibehaltung der gebildeten Filmschlaufe (86) zur Aufzeichnungstrommel (9) transportiert und aufgespannt wird.

30. Betriebsweise der Vorrichtung nach Anspruch 28 oder 29, dadurch gekennzeichnet, daß der für die Belichtungs-Phase vorgesehene Nennwert des Vakuums durch Öffnen des Nebenluft-Ventils (43) für die Dauer der Aufspann-Phase abgesenkt wird, wodurch das Filmblatt (25') mit vermindertem Unterdruck angesaugt wird.

31. Betriebsweise der Vorrichtung nach einem der Ansprüche 28 bis 30, dadurch gekennzeichnet, daß
a) der Nennwert und der reduzierte Nennwert für das Vakuum mittels des Vakuummessers (42) gemessen werden,
b) die gemessenen IST-Werte mit SOLL-Werten verglichen werden, und
c) falls die gemessenen IST-Werte die SOLL-Werte nicht erreichen, die bisher durchgeführten Vorgänge rückgängig gemacht werden und die Filmbahn (25) wieder in die Rollfilm-Kassette (3) zurücktransportiert wird.

32. Betriebsweise der Vorrichtung nach einem der Ansprüche 28 bis 31, dadurch gekennzeichnet, daß die Rollfilm-Kassette (3) außerhalb des Reproduktionsgerätes mit der Filmrolle (15) geladen, in den lichtdichten Raum (1) des Reproduktionsgerätes gebracht und dann auf der Ladebühne (5) abgesetzt und arretiert wird.

33. Betriebsweise der Vorrichtung nach einem der Ansprüche 28 bis 32, dadurch gekennzeichnet, daß die Länge der Filmbahn (25), welche die Filmlängen-Meßvorrichtung (32) durchläuft, gemessen und die gemessene Filmlänge mit dem konstanten Abstand zwischen Filmlängen-Meßvorrichtung (32) und der Aufspann-Marke (84) in der Aufspann-Startposition der Aufzeichnungstrommel (9) laufend verglichen wird, und daß die Filmtransport-Mittel (22;23) bei Gleichheit gestoppt werden, wobei sich der Anfang der Filmbahn (25) auf der Aufspann-Marke (84) befindet.

34. Betriebsweise der Vorrichtung nach einem der Ansprüche 28 bis 33, dadurch gekennzeichnet, daß die Länge der zusätzlich transportierten Filmbahn (25) in der Filmlängen-Meßvorrichtung (32) gemessen, und die gemessene Filmlänge mit einer vorgegebenen Länge für die Filmschlaufe (86) verglichen wird, und daß bei Gleichheit die Filmtransport-Mittel (22;23) gestoppt werden.

35. Betriebsweise der Vorrichtung nach einem der Ansprüche 28 bis 34, dadurch gekennzeichnet, daß beim Aufspannen der Filmbahn (25) die Messung der Filmbahnlänge in der Filmlängen-Meßvorrichtung (32), ausgehend von der bisher gemessenen Filmlänge, fortgesetzt und die momentan gemessene Filmlänge mit der vorgegebenen Länge für das jeweils aufzuspannende Filmblatt (25') unter Berücksichtigung des konstanten Abstandes zwischen der Filmlängen-Meßvorrichtung (32) und der Film-Schneidevorrichtung (26) verglichen wird, und daß bei Gleichheit die Filmtransport-Mittel (22;23) und der Positionier-Antrieb (54) gestoppt werden, wobei das Ende des von der Filmbahn (25) abzuschneidenden Filmblattes (25') unter der Film-Schneidevorrichtung (26) liegt.

36. Betriebsweise der Vorrichtung nach einem der Ansprüche 28 bis 35, dadurch gekennzeichnet, daß die Filmbahn (25) nach Abschneiden des Filmblattes (25') durch Starten der Filmtransport-Mittel (22;23) und des Wickel-Motors (18) wieder in die Rollfilm-Kassette (3) rücktransportiert und auf die Filmrolle (15) aufgewickelt wird.

37. Betriebsweise einer Vorrichtung zum automatischen Aufspannen von Filmmaterial auf eine Aufzeichnungstrommel eines Reproduktionsgerätes und zum Aufspannen des durch ein Aufzeichnungsorgan aufgezeichneten Filmmaterials von der Aufzeichnungstrommel, die in der Mantelfläche axial zur Trommelachse verlaufende und über eine Saugleitung an eine ortsfeste Vakuum-Pumpe anschließbare Saugloch-Reihen aufweist, bei der
a) eine Rollfilm-Kassette (3) außerhalb des Reproduktionsgerätes mit einer Filmrolle (15) geladen, in einen lichtdichten Raum (1) des Reproduktionsgerätes gebracht und dann auf einer Ladebühne (5) abgesetzt und arretiert wird,
b) die Aufzeichnungstrommel (9) mittels eines Positionier-Antriebes (54) in eine Aufspann-Startposition gedreht wird, in der sich eine Aufspann-Marke (84) auf der Aufzeichnungstrommel (9) im Bereich einer Andruckrolle (62) einer Andruck-Vorrichtung (61) und im Bereich einer Saugloch-Reihe (38') befindet, wobei die Aufspann-Marke (84) diejenige Mantellinie der Aufzeichnungstrommel (9) markiert, auf der der Anfang eines aufzuspannenden Filmblattes (25') auf der Aufzeichnungstrommel (9) liegen soll,
c) Filmtransport-Mittel (22;23) gestartet werden und die Filmbahn (25) von der Filmrolle (15) der Rollfilm-Kassette (3) abgewickelt und über eine Transport- und Leitfläche (30;31) zur Aufzeichnungstrommel (9) transportiert wird,
d) die Länge der Filmbahn (25), welche eine Filmlängen-Meßvorrichtung (32) durchläuft, gemessen und die gemessene Filmlänge mit dem konstanten Abstand zwischen Filmlängen-Meßvorrichtung (32) und der Aufspann-Marke (84) in der Aufspann-Startposition der Aufzeichnungstrommel (9) laufend verglichen wird und die Filmtransport-Mittel (22;23) bei Gleichheit gestoppt werden, wobei sich der Anfang der Filmbahn (25) auf der Aufspann-Marke (84) befindet,
e) die Andruckrolle (62) der Andruck-Vorrichtung (61) auf die Aufzeichnungstrommel (9) abgesenkt und der Anfang der Filmbahn (25) an die Aufzeichnungstrommel (9) angedrückt wird,
f) die Vakuum-Pumpe (44) eingeschaltet und der Anfang der Filmbahn (25) durch die Saugloch-Reihe (38') auf der Aufzeichnungstrommel (9) fixiert wird,
g) die Filmtransport-Mittel (22;23) erneut gestartet werden, zusätzliche Filmbahn (25) aus der Rollfilm-Kassette (3) heraustransportiert und eine Filmschlaufe (86) im Anfangsbereich der Filmbahn (25) durch Nachschieben der Filmbahn (25) gebildet wird,
h) die Länge der zusätzlich transportierten Filmbahn (25) in der Filmlängen-Meßvorrichtung (32) gemessen und die gemessene Filmlänge mit einer vorgegebenen Länge für die Filmschlaufe (86) verglichen wird und bei Gleichheit die Filmtransport-Mittel (22;23) wieder gestoppt werden,
i) der Positionier-Antrieb (54) zur Drehung der Aufzeichnungstrommel (9) und die Filmtransport-Mittel (22;23) gestartet werden und die weitere Filmbahn (25) zur Aufzeichnungstrommel (9) transportiert und auf die rotierende Aufzeichnungstrommel (9) aufgespannt wird, wobei die Geschwindigkeiten von Filmtransport-Mitteln (22;23) und Positionier-Antrieb (54) so aufeinander abgestimmt sind, daß die Filmschlaufe (86) annähernd erhalten bleibt,
j) beim Aufspannen der Filmbahn (25) die Messung der Filmbahnlänge in der Filmlängen-Meßvorrichtung (32), ausgehend von der bisher gemessenen Film länge, fortgesetzt und die momentan gemessene Film länge mit der vorgegebenen Länge für das jeweils aufzuspannende Filmblatt (25') unter Berücksichtigung des konstanten Abstandes zwischen der Filmlängen-Meßvorrichtung (32) und einer Film-Schneidevorrichtung (26) verglichen wird und bei Gleichheit die Film-Transportmittel (22;23) und der Positionier-Antrieb (54) gestoppt werden, wobei das Ende des von der Filmbahn (25) abzuschneidenden Filmblattes (25') unter der Film-Schneidevorrichtung (26) liegt,
k) das aufzuspannende Filmblatt (25') vorgegebener Länge von der Filmbahn (25) mittels der Film-Schneidevorrichtung (26) abgetrennt und die Filmbahn (25) durch Starten der Filmtransport-Mittel (22;23) und eines Wickel-Motors (18) wieder in die Rollfilm-Kassette (3) zurücktransportiert und auf die Filmrolle (15) aufgewickelt wird,
l) der Positionier-Antrieb (54) erneut gestartet, der restliche Teil des Filmblattes (25') auf die Aufzeichnungstrommel (9) aufgespannt und der Positionier-Antrieb (54) wieder gestoppt wird, wenn sich die Aufzeichnungstrommel (9) in einer Belichtungs-Startposition befindet, in der sich die Aufspann-Marke (84) in einer optischen Achse des Aufzeichnungsorgans (48) befindet,
m) in der Belichtungs-Startposition der Aufzeichnungstrommel (9) der Positionier-Antrieb (54) und die Andruckrolle (62) der Andruck-Vorrichtung (61) von der Aufzeichnungstrommel (9) abgehoben werden,
n) ein Haupt-Motor (49) für das Drehen der Aufzeichnungstrommel (9) eingeschaltet und das auf der rotierenden Aufzeichnungstrommel (9) aufgespannte Filmblatt (25') durch das Aufzeichnungsorgan (48) punkt- und zeilenweise belichtet wird,
o) nach der Belichtung des Filmblattes (25') der Haupt-Motor (49) gestoppt und der Positionier-Antrieb (54) wieder an die Aufzeichnungstrommel (9) angeschwenkt und gestartet wird,
p) die Aufzeichnungstrommel (9) durch den Positionier-Antrieb (54) in eine Abspann-Startposition gedreht wird, in der ein auf die Aufzeichnungstrommel (9) abgesenkter Abhebefinger (68) einer Abhebe-Vorrichtung (66) auf der durch eine Abspann-Marke (90) markierten Mantellinie der Aufzeichnungstrommel (9) liegt,
q) in der Abspann-Startposition die Andruckrolle (62) der Andruck-Vorrichtung (61) und der Abhebefinger (68) der Abhebe-Vorrichtung (66) auf die Aufzeichnungstrommel (9) abgesenkt werden und der Transport-Motor (74) für ein Filmtransport-Rollenpaar (73) gestartet wird, und
r) der Positionier-Antrieb (54) gestartet und das belichtete Filmblatt (25') durch den abgesenkten Abhebefinger (68) von der Trommeloberfläche abgeschält und durch die Drehung der Aufzeichnungstrommel (9) zum Transport-Rollenpaar (73) transportiert und von diesem durch die Filmaustritts-Öffnung (67) des lichtdichten Raumes (1) aus dem Reproduktionsgerät transportiert wird.

## Claims

1. A device for the automatic clamping of film material onto a recording drum of a reproduction apparatus and for the releasing of the film material, which has been exposed by a recording element, from the recording drum, which is situated in a light-tight chamber (1) of the reproduction apparatus, consisting of
a) a roll film cassette (3) containing the film material as rotatable film roll (15) and provided with a slit-shaped film passage opening (14) closing in a light-tight manner, which roll film cassette (3) is able to be introduced in the light-tight chamber (1) and is able to be arrested there, in which the film passage opening (14) points towards the recording drum (9) and runs axially thereto,
b) a transporting and guiding surface (30;31) arranged between the film passage opening (14) of the roll film cassette (3) and the recording drum (9), which surface runs in the region of the recording drum (9) substantially tangentially to the latter, for the film strip (25) which is unwound from the film roll (15),
c) film transporting means (22;23) to transport the film strip (25) from the roll film cassette (3) and to the recording drum (9),
d) a film cutting device (26) arranged between the roll film cassette (3) and the recording drum (9) to separate a film sheet (25') of given length, which is to be exposed in each case, from the film strip (25),
e) a film length measuring device (32) arranged between the roll film cassette (3) and the recording drum (9) to establish the length of the film strip (25) running through in each case,
f) a proofing device (61) with proof roller (62), which is able to be swung against the recording drum (9) in the region in which the start of the film strip (25), transported via the transporting and guiding surface (30;31) to the recording drum (9), comes into contact with the drum surface,
g) a positioning drive (54) for turning the recording drum (9) into a clamping exposure, and release start position,
h) a lifting device (66) with a lifting finger (68) which is able to be swung against the recording drum (9) to peel off the respectively exposed film sheet from the recording drum (9), and
j) rows of suction holes (38') in the surface of the recording drum (9), which run axially to the drum axis and are able to be connected to a fixed vacuum pump (44) for the vacuum fixing of the film sheet (25') on the recording drum (9).

2. A device according to Claim 1, characterised in that a controllable auxilary air valve (43) is connected into the suction line (41) to reduce the vacuum during the clamping and/or releasing of the film material.

3. A device according to Claim 1 or 2, characterised in that the roll film cassette (4) has sealing rollers (21) arranged above and below the film strip (25) to seal off light in the region of the film passage opening (14), the length of which sealing rollers (21) corresponds at least to the length of the film passage opening (14).

4. A device according to one of Claims 1 to 3, characterised in that the film transporting means (22;23) consist of transport rollers (22) arranged in the roll film cassette (3) above and below the film strip (25), at least one of which transport rollers (22) is able to be driven by a film transport motor (23).

5. A device according to Claim 4, characterised in that
a) the film transport motor (23) is secured fixedly on the apparatus carrier (6) of the reproduction apparatus, and
b) the driven transport roller (22) is able to be connected through the wall of the roll film cassette (3) with the film transport motor (23).

6. A device according to one of Claims 1 to 5, characterised in that the shaft (16) of the film roll (15) in the roll film cassette (3) is able to be coupled with a winding motor (18), in order to transport the unwound film strip (25) back again if necessary into the roll film cassette (3) and to wind it onto the film roll (15).

7. A device according to one of Claims 1 to 6, characterised in that through constant excitation of the winding motor (18) a counter-rotational moment to the rotational moment of the film transport motor (23) is able to be produced, in order to grip the film strip (25) between the film roll (15) and the transport rollers (22).

8. A device according to one of Claims 1 to 7, characterised in that the roll film cassette (3) consists of a lower part (12) and a removable cover (13) closing in a light-tight manner.

9. A device according to one of Claims 1 to 8, characterised in that in each case a roller of the pair of sealing rollers (21) and of the pair of transport rollers (22) is mounted in the lower part (12) of the roll film cassette (3) and in each case the other roller is mounted in the cover (13).

10. A device according to one of Claims 1 to 9, characterised in that the light-tight chamber (1) of the reproduction apparatus has a loading flap (2), closing in a light-tight manner and able to be locked, for the introduction of the roll film cassette (3).

11. A device according to one of Claims 1 to 10, characterised in that
a) the apparatus carrier (6) inside the light-tight chamber (1) has a loading platform (5) for the depositing of the roll film cassette (3), and
b) means (7;8;11) are present for aligning the roll film cassette (3) with respect to the recording drum (9) and for arresting the roll film cassette (3) on the apparatus carrier (6).

12. A device according to one of Claims 1 to 11, characterised in that the film cutting device (26) for the film strip (25) is constructed as a striking blade.

13. A device according to one of Claims 1 to 11, characterised in that the film cutting device (26) for the film strip (25) is constructed as a circular blade which is movable rotatably along the cutting line transversely to the film strip (25).

14. A device according to one of Claims 1 to 13, characterised in that the film length measuring device (32) consists of a measuring wheel (33) driven by the movement of the film strip (25), of a supporting wheel (34) pressing the film strip (25) against the measuring wheel in a resilient manner, and of a rotational pulse transmitter (35) coupled with the measuring wheel (33), which transmitter converts the rotation of the measuring wheel (33) into a series of cycles, in which the number of cycles is a measurement for the measured film length.

15. A device according to one of Claims 1 to 14, characterised in that the positioning drive (54) consists of a swivellable carrier plate (57), of a friction wheel (56) rotatably mounted on the carrier plate (57) and of an auxiliary motor (55) secured on the carrier plate (57) and coupled with the friction wheel (56), in which the carrier plate (57) is swivellable such that the friction wheel (56) lies against the recording drum (9).

16. A device according to one of Claims 1 to 15, characterised in that the light-tight chamber (1) in the region of the lifting device (66) has a slit-shaped film outlet opening (67) for the exposed film sheets.

17. A device according to one of Claims 1 to 16, characterised in that the lifting device (66) is provided with a film guiding channel (72), which points in the direction of the film outlet opening (67) when the lifting finger (68) is swung against the recording drum (9).

18. A device according to one of Claims 1 to 17, characterised in that between the lifting device (66) and the film outlet opening (67) a further drivable pair of film transporting rollers (73) is provided, in order to transport the exposed film sheets from the light-tight chamber (1) through the film outlet opening (67).

19. A device according to one of Claims 1 to 18, characterised in that at least one light barrier (76) is provided to monitor the transporting of the film.

20. A device according to one of Claims 1 to 19, characterised in that a carrier film cassette is able to be connected in a light-tight manner to the film outlet opening (67) of the light-tight chamber (1) to receive the exposed film sheets.

21. A device according to one of Claims 1 to 19, characterised in that the film transporting channel of a film developing station is able to be connected in a light-tight manner to the film outlet opening (67) of the light-tight chamber (1).

22. A device according to one of Claims 1 to 21, characterised in that the suction holes (38) in the surface of the recording drum (9) are arranged in rows running axially, in which the spaces between the suction hole rows, with regard to the circumference, are matched to the lengths of the usual formats of the film sheets which are to be clamped.

23. A device according to one of Claims 1 to 22, characterised in that a vacuum gauge (42) is connected into the suction line (41) for vacuum monitoring, which gauge (42) emits an electrical measurement signal.

24. A device according to one of Claims 1 to 23, characterised in that the recording drum (9) has a first circumferential mark (clamping mark), which marks the surface line on which in each case the start of a film sheet, which is to be clamped, is fixed on the recording drum (9) in the clamping start position.

25. A device according to one of Claims 1 to 24, characterised in that the recording drum (9) has a second circumferential mark (release mark), which marks the surface line on which the lifting finger (68) of the lifting device (66) in each case is lowered onto the recording drum (9) in the release start position.

26. A device according to one of Claims 1 to 25, characterised in that
a) the maximum length of a film sheet which is to be clamped is smaller than the circumferential length of the recording drum (9) and
b) the second circumferential mark (release mark) is arranged in the surface region of the recording drum (9) which is not covered by the clamped film sheet of maximum length.

27. A device according to one of Claims 1 to 26, characterised in that the shaft of the recording drum (9) is connected with a position indicator (77) for marking the clamping, exposure and release start position of the recording drum (9).

28. A method of operation of a device for the automatic clamping of film material onto a recording drum, arranged in a light-tight chamber, of a reproduction apparatus, and for the releasing of the film material, exposed by a recording element, from the recording drum, which has rows of suction holes running in the surface axially to the drum axis and able to be connected via a suction line to a fixed vacuum pump, in which
a) the recording drum (9) is turned by means of a positioning drive (54) into a clamping start position,
b) film transporting means (22;23) are started and the film strip (25) is unwound from a film roll (15) of a roll film cassette (3) and is transported via a transporting and guiding surface (30;31) to the recording drum (9),
c) the film transporting means (22;23) are stopped when the start of the transported film strip (25) lies in the clamping start position in the region of a proof roller (62) of a proofing device (61) and in the region of a row of suction holes (38') of the recording drum (9),
d) the proof roller (62) of the proofing device (61) is lowered onto the recording drum (9) to press against the start of the film strip (25) and the start of the film strip (25) is fixed on the recording drum (9) by action on the row of suction holes (38') with vacuum,
e) the film transporting means (22;23) and the positioning drive (54) are started to turn the recording drum (9) and further film strip (25) is transported to the recording drum (9) and is clamped,
f) on clamping of the film strip (25), the film strip length is measured in a film length measuring device (32) and the film transporting means (22;23) and the positioning drive (54) are stopped, when the end of the film sheet (25') of given length, which is to be cut off from the film strip (25), lies under the film cutting device (26),
g) the film sheet (251) is cut off from the film strip (25) by the film cutting device (26), the remaining part of the film sheet (25') is clamped by means of the positioning drive (54) onto the recording drum (9) and then the proof roller (62) of the proofing device (61) is lifted from the recording drum (9),
h) the fixed film sheet (25') is exposed by dot and by line by the recording element (48),
i) the recording drum (9), after exposure, is turned by the positioning drive (54) into a release start position, in the release start position the proof roller (62) of the proofing device (61) and a lifting finger (68) of a lifting device (66) are lowered onto the recording drum (9), and
j) the exposed film sheet (25') is peeled off from the drum surface by means of the lowered lifting finger (68) by turning the recording drum (9).

29. A method of operation of the device according to Claim 28, characterised in that
a) after the fixing of the start of the film strip (25) on the recording drum (9) only the film transporting means (22;23) are started and by supplying additional film strip (25) from the roll film cassette (3) in the start region of the film strip (25) a film loop of given length is formed and
b) after formation of the film loop (86), the positioning drive (54) is started for rotation of the recording drum (9) and further film strip (25) is transported to the recording drum (9) and clamped, whilst maintaining the formed film loop (86).

30. A method of operation of the device according to Claim 28 or 29, characterised in that the nominal value of the vacuum provided for the exposure phase is lowered by opening the auxiliary air valve (43) for the duration of the clamping phase, whereby the film sheet (25') is sucked with reduced underpressure.

31. A method of operation of the device according to one of Claims 28 to 30, characterised in that
a) the nominal value and the reduced nominal value for the vacuum are measured by means of the vacuum gauge (42),
b) the measured actual values are compared with nominal values, and
c) if the measured actual values do not reach the nominal values, the processes carried out hitherto are cancelled and the film strip (25) is transported back into the roll film cassette (3) again.

32. A method of operation of the device according to one of Claims 28 to 31, characterised in that the roll film cassette (3) is loaded with the film roll (15), outside the reproduction apparatus, is brought into the light-tight chamber (1) of the reproduction apparatus and is then deposited on the loading platform (5) and arrested.

33. A method of operation of the device according to one of Claims 28 to 32, characterised in that the length of the film strip (25), which runs through the film length measuring device (32), is measured and the measured film length is continuously compared with the constant distance between the film length measuring device (32) and the clamping mark (84) in the clamping start position of the recording drum (9), and that the film transporting means (22;23) are stopped when equality is reached, in which the start of the film strip (25) is situated on the clamping mark (84).

34. A method of operation of the device according to one of Claims 28 to 33, characterised in that the length of the additionally transported film strip (25) is measured in the film length measuring device (32), and the measured film length is compared with a given length for the film loop (86), and that when equality is reached, the film transporting means (22;23) are stopped.

35. A method of operation of the device according to one of Claims 28 to 34, characterised in that on clamping the film strip (25), the measuring of the film strip length in the film length measuring device (32), starting from the film length measured hitherto, is continued and the instantaneously measured film length is compared with the given length for the film sheet (25') which is to be clamped respectively, taking into account the constant distance between the film length measuring device (32) and the film cutting device (26), and that when equality is reached, the film transporting means (22;23) and the positioning drive (54) are stopped, in which the end of the film sheet (25'), which is to be cut off from the film strip (25), lies under the film cutting device (26).

36. A method of operation of the device according to one of Claims 28 to 35, characterised in that the film strip (25), after the cutting off of the film sheet (25') is transported back into the roll film cassette (3) again by starting the film transporting means (22;23) and the winding motor (18), and is wound onto the film roll (15).

37. A method of operation of a device for the automatic clamping of film material onto a recording drum of a reproduction apparatus and for the clamping of the film material, recorded by a recording element, from the recording drum, which has rows of suction holes running in the surface axially to the drum axis and able to be connected via a suction line to a fixed vacuum pump, in which
a) a roll film cassette (3) is loaded with a film roll (15) outside the reproduction apparatus, is brought into a light-tight chamber (1) of the reproduction apparatus and is then deposited on a loading platform (5) and arrested,
b) the recording drum (9) is turned by means of a positioning drive (54) into a clamping start position, in which a clamping mark (84) is situated on the recording drum (9) in the region of a proof roller (62) of a proofing device (61) and in the region of a suction hole row (38'), in which the clamping mark (84) marks the surface line of the recording drum (9) on which the start of a film sheet (25'), which is to be clamped, is to lie on the recording drum (9),
c) film transporting means (22;23) are started and the film strip (25) is unwound from the film roll (15) of the roll film cassette (3) and is transported via a transporting and guiding surface (30;31) to the recording drum (9),
d) the length of the film strip (25), which runs through a film length measuring device (32), is measured and the measured film length is continuously compared with the constant distance between the film length measuring device (32) and the clamping mark (84) in the clamping start position of the recording drum (9) and the film transporting means (22;23) are stopped when equality is reached, in which the start of the film strip (25) is situated on the clamping mark (84),
e) the proof roller (62) of the proofing device (61) is lowered onto the recording drum (9) and the start of the film strip (25) is pressed against the recording drum (9),
f) the vacuum pump (44) is switched on and the start of the film strip (25) is fixed by the row of suction holes (38') on the recording drum (9),
g) the film transporting means (22;23) are started again, additional film strip (25) is transported out from the roll film cassette (3) and a film loop (86) is formed in the start region of the film strip (25) by feeding the film strip (25),
h) the length of the additionally transported film strip (25) is measured in the film length measuring device (32) and the measured film length is compared with a given length for the film loop (86) and when equality is reached, the film transporting means (22;23) are stopped again,
i) the positioning drive (54), to turn the recording drum (9), and the film transporting means (22;23) are started and the further film strip (25) is transported to the recording drum (9) and is clamped onto the rotating recording drum (9), in which the speeds of film transporting means (22;23) and positioning drive (54) are coordinated with each other so that the film loop (86) is approximately maintained,
j) on clamping of the film strip (25), the measuring of the film strip length in the film length measuring device (32) is continued, starting from the film length measured hitherto, and the instantaneously measured film length is compared with the given length for the film sheet (25') to be clamped respectively, taking into account the constant distance between the film length measuring device (32) and a film cutting device (26), and when equality is reached the film transporting means (22;23) and the positioning drive (54) are stopped, in which the end of the film sheet (25') which is to be cut off from the film strip (25) lies under the film cutting device (26),
k) the film sheet (25') of given length, which is to be clamped, is separated from the film strip (25) by means of the film cutting device (26) and the film strip (25) is transported back into the roll film cassette (3) again by starting the film transporting means (22;23) and a winding motor (18), and is wound onto the film roll (15),
l) the positioning drive (54) is started again, the remaining part of the film sheet (25') is clamped onto the recording drum (9) and the positioning drive (54) is stopped again, when the recording drum (9) is situated in an exposure start position, in which the clamping mark (84) is situated in an optical axis of the recording element (48),
m) in the exposure start position of the recording drum (9), the positioning drive (54) and the proof roller (62) of the proofing device (61) are lifted from the recording drum (9),
n) a main motor (49) is switched on for the turning of the recording drum (9) and the film sheet (25') clamped on the rotating recording drum (9) is exposed by dot and by line by the recording element (48),
o) after the exposure of the film sheet (25'), the main motor (49) is stopped and the positioning drive (54) is swung against the recording drum (9) again and is started,
p) the recording drum (9) is turned by the positioning drive (54) into a release start position, in which a lifting finger (68), which is lowered onto the recording drum (9), of a lifting device (66), lies on the surface line of the recording drum (9) marked by a release mark (90),
q) in the release start position, the proof roller (62) of the proofing device (61) and the lifting finger (68) of the lifting device (66) are lowered onto the recording drum (9) and the transport motor (74) is started for a pair of film transporting rollers (73), and
r) the positioning drive (54) is started and the exposed film sheet (25') is peeled off from the drum surface by the lowered lifting finger (68) and through the rotation of the recording drum (9) is transported to the pair of transporting rollers (73) and is transported by the latter through the film outlet opening (67) of the light-tight chamber (1) from the reproduction apparatus.

## Revendications

1. Dispositif pour fixer automatiquement un matériau en forme de film sur un tambour d'enregistrement d'un appareil de reproduction et pour détacher le film insolé par un organe d'enregistrement par rapport au tambour, dans une chambre obscure (1) d'un appareil de reproduction, comprenant:
a) une cassette à rouleau de film (3), comportant le matériau en forme de film sur un rouleau à film (15), susceptible d'être tournée et ayant une ouverture (14) pour le passage du film, en forme de fente, fermée de manière étanche à lumière , cette cassette pouvant se placer dans le volume étanche à lumière (1) et y être bloquée, l'ouverture de passage du film (14) étant tournée vers le tambour d'enregistrement (9), axialement par rapport à celui-ci,
b) une surface de transport et de guidage (30, 31) prévue entre l'ouverture de passage de film (14) de la cassette à rouleau de film (3) et du tambour d'enregistrement (9), cette surface étant essentiellement tangente au tambour d'enregistrement (9), au niveau du tambour, pour la partie (25) du film dévidé du rouleau à film (15),
c) des moyens de transport de film (22, 23) pour entraîner la bande (25) du film de la cassette à rouleau de film (3) vers le tambour d'enregistrement (9),
d) un dispositif de coupe de film (26) prévu entre la cassette à rouleau de film (3) et le tambour d'enregistrement (9), pour couper chaque fois une feuille de film à éclairer (25'), de longueur prédéterminée par rapport à la bande (25) du film,
e) un dispositif (32) de mesure des longueurs de film entre la cassette à rouleau de film (3) et le tambour d'enregistrement (9), pour déterminer la longueur de défilement de la bande de film (25),
f) un dispositif applicateur (61) avec un rouleau applicateur (62) qui peut être basculé contre le tambour d'enregistrement (9) dans la zone de celui-ci dans laquelle le début de la bande de film (25) transportée vers le tambour d'enregistrement (9), passant sur la surface de transport et de guidage (30, 31), arrive sur le tambour d'enregistrement (9),
g) un entraînement de positionnement (54) pour faire tourner le tambour d'enregistrement (9) dans une position de fixation, d'insolation et d'enlèvement, et de début,
h) un dispositif de soulèvement (66) avec un doigt de soulèvement (68) basculant contre le tambour d'enregistrement (9) pour la feuille de film déjà insolée, par rapport au tambour d'enregistrement (9), et
j) des rangées de trous d'aspiration (38') dans la surface enveloppe du tambour d'enregistrement (9'), dirigées axialement par rapport à l'axe du tambour et qui peuvent être reliées à une pompe à vide (44), fixe, pour bloquer la feuille du film (25') par le vide, contre le tambour d'enregistrement (9).

2. Dispositif selon la revendication 1, caractérisé en ce qu'une soupape d'air auxiliaire (43), commandée, est montée dans la conduite d'aspiration (41) pour réduire le vide pendant la fixation et/ou l'enlèvement du matériau en forme de film.

3. Dispositif selon la revendication 1 ou 2, caractérisé en ce que la cassette à rouleau de film (4) comporte, pour assurer l'étanchéité vis-à-vis de la lumière, au niveau de l'orifice de passage de film (14), des rouleaux d'étanchéité (21) prévus au-dessus et au dessous de la nappe de film (25), et dont la longueur correspond au moins à la longueur de l'orifice de passage de film (14).

4. Dispositif selon l'une des revendications 1 à 3, caractérisé en ce que les moyens de transport de film (22, 23) se composent de rouleaux de transport (22) prévus dans la cassette à rouleau de film (3) au-dessus et au dessous de la nappe de film (25), au moins l'un des rouleaux étant entraîné par un moteur de transport de film (23).

5. Dispositif selon la revendication 4, caractérisé en ce que:
a) le moteur de transport de film (23) est monté de manière fixe sur le support (6) de l'appareil de reproduction et,
b) le rouleau de transport (22), entraîné est relié à travers la paroi de la cassette à rouleau de film (3), au moteur de transport de film (23).

6. Dispositif selon l'une des revendications 1 à 5, caractérisé en ce que l'axe (16) du rouleau de film (15) dans la cassette à rouleau de film (3) peut être couplé à un moteur d'enroulement (18) pour permettre de rembobiner le cas échéant la nappe de film (25) dévidée, de nouveau dans la cassette à rouleau de film (3), et d'enrouler le film sur le rouleau (15).

7. Dispositif selon l'une des revendications 1 à 6, caractérisé en ce qu'une excitation permanente du moteur d'enroulement (18) crée un couple antagoniste au couple de rotation du moteur de transport de film (23) pour tendre la nappe de film (25) entre le rouleau de film (15) et les rouleaux de transport (22).

8. Dispositif selon l'une des revendications 1 à 7, caractérisé en ce que la cassette à rouleau de film (3) se compose d'une partie inférieure (12) et d'un couvercle (13) amovible fermé d'une manière étanche à la lumière.

9. Dispositif selon l'une des revendications 1 à 8, caractérisé en ce chaque fois un rouleau d'une paire de rouleaux d'étanchéité (21) et de la paire de rouleaux de transport (22), est monté dans la partie inférieure (12) de la cassette à rouleau de film (3), et l'autre rouleau respectif est monté dans le couvercle (13).

10. Dispositif selon l'une des revendications 1 à 9, caractérisé en ce que la chambre (1) étanche à la lumière de l'appareil de reproduction comporte un volet de chargement (2) se fermant de manière étanche à la lumière et qui peut être verrouillé pour introduire la cassette à rouleau de film (3).

11. Dispositif selon l'une des revendications 1 à 10, caractérisé en ce que:
a) le support d'appareil (6) comporte un plateau de chargement (5) à l'intérieur de la chambre noire (1) pour déposer la cassette à rouleau de film (5), et
b) des moyens (7, 8, 11) sont prévus pour aligner la cassette à rouleau de film (3) par rapport au tambour d'enregistrement (9) et pour bloquer la cassette à rouleau de film (3) sur le support d'appareil (6).

12. Dispositif selon l'une des revendications 1 à 11, caractérisé en ce que le dispositif de découpe de film (26) est en forme de couteau à guillotine pour la nappe de film (25).

13. Dispositif selon l'une des revendications 1 à 11, caractérisé en ce que le dispositif de découpe de film (26) pour la nappe de film (25) est un couteau circulaire mobile en rotation suivant la ligne de coupe transversalement à la nappe de film (25).

14. Dispositif selon l'une des revendications 1 à 13, caractérisé en ce que le dispositif de mesure des longueurs de film (32) se compose d'une roue de mesure (33) entraînée par le mouvement de la nappe de film (25), et d'une roue d'appui (34) qui appuie élastiquement la nappe de film (25) contre la roue de mesure, ainsi que d'un générateur d'impulsions de rotation (35) couplé à la roue de mesure (33) et qui transforme la rotation de la roue de mesure (33) en une cadence, le nombre des pas de la cadence étant une mesure de la longueur de film mesurée.

15. Dispositif selon l'une des revendications 1 à 14, caractérisé en ce que l'entraînement de positionnement (54) se compose d'une plaque de support (57) susceptible de basculer, d'une roue de friction (56) montée à rotation sur la plaque de support (57) et d'un moteur auxiliaire (55) fixé à la plaque de support (57) et couplé à la roue de friction (56), la plaque de support (57) pouvant être basculée pour que la roue de friction (56) s'appuie contre le tambour d'enregistrement (9).

16. Dispositif selon l'une des revendications 1 à 15, caractérisé en ce que la chambre obscure (1) comporte au niveau du dispositif de soulèvement (66), une ouverture de sortie de film (67) en forme de fente pour les feuilles de film insolées.

17. Dispositif selon l'une des revendications 1 à 16, caractérisé en ce qu'entre le dispositif de soulèvement (56) est muni d'un canal de guidage de film (72) qui est tourné dans la direction de l'orifice de sortie de film (67), lorsque le doigt de soulèvement (68) est basculé contre le tambour d'enregistrement (9).

18. Dispositif selon l'une des revendications 1 à 17, caractérisé en ce que le dispositif de soulèvement (66) et l'ouverture de sortie de film (67), il est prévu une autre paire de rouleaux (73) entraînés, pour le transport du film, pour transférer les feuilles de film insolées de la chambre obscure (1) à travers l'ouverture de sortie de film (67).

19. Dispositif selon l'une des revendications 1 à 18, caractérisé par au moins une barrière lumineuse (76) pour surveiller le transport du film.

20. Dispositif selon l'une des revendications 1 à 19, caractérisé en ce qu'une cassette de réception de film pour recevoir les feuilles de film insolées peut être reliée, de manière étanche à la lumière, à l'ouverture de sortie de film (67) de la chambre obscure (1).

21. Dispositif selon l'une des revendications 1 à 19, caractérisé en ce qu'un poste de développement de film peut être raccordé, de manière étanche à la lumière, contre l'ouverture de sortie de film (67) de la chambre obscure (1), au niveau du canal de transport de film.

22. Dispositif selon l'une des revendications 1 à 21, caractérisé en ce que les orifices d'aspiration (38) de la surface enveloppe du tambour d'enregistrement (9) sont prévus en rangées axiales, et les écarts périphériques des rangées d'orifices d'aspiration sont adaptés à la longueur des formats usuels des feuilles de film à fixer.

23. Dispositif selon l'une des revendications 1 à 22, caractérisé en ce qu'un dispositif de mesure de dépression (42) est branché dans la conduite d'aspiration (41) pour surveiller le vide, cet appareil de mesure émettant un signal de mesure électrique.

24. Dispositif selon l'une des revendications 1 à 23, caractérisé en ce que le tambour d'enregistrement (9) comporte un premier repère périphérique (repère de fixation) qui désigne la génératrice sur laquelle on bloque le début respectif d'une feuille de film à fixer sur le tambour d'enregistrement (9) en position de début de fixation.

25. Dispositif selon l'une des revendications 1 à 24, caractérisé en ce que le tambour d'enregistrement (9) comporte un second repère périphérique (repère de détachement) qui caractérise la génératrice sur laquelle le doigt de soulèvement (68) du dispositif de soulèvement (66) est abaissé en position de début de détachement contre le tambour d'enregistrement (9).

26. Dispositif selon l'une des revendications 1 à 25, caractérisé en ce que:
a) la longueur maximale d'une feuille de film à mettre en place est inférieure à la périphérie du tambour d'enregistrement (9), et
b) le second repère périphérique (repère de détachement) se trouve dans la zone enveloppe du tambour d'enregistrement (9) non recouverte par la feuille de film mise en place et qui correspondrait à la longueur maximale.

27. Dispositif selon l'une des revendications 1 à 26, caractérisé en ce que l'axe du tambour d'enregistrement (9) est relié à un générateur de position (77) pour marquer la position de fixation, la position d'insolation et la position de début de détachement du tambour d'enregistrement (9).

28. Mise en oeuvre d'un dispositif pour fixer automatiquement un matériau en forme de film sur un tambour d'enregistrement placé dans une chambre obscure d'un appareil de reproduction et pour détacher le film insolé à l'aide d'un organe d'enregistrement, par rapport au tambour d'enregistrement, et ayant des rangées d'orifices d'aspiration dans la surface enveloppe, ces rangées étant dirigées axialement par rapport à l'axe du tambour et reliés par une conduite d'aspiration à une pompe à vide, fixe, selon lequel:
a) le tambour d'enregistrement (9) est tourné dans une position de début de mise en place par un entraînement de positionnement (54),
b) les moyens de transport de film (22, 23) sont démarrés et la nappe de film (25) est dévidée d'un rouleau de film (15) placé dans une cassette (3) à rouleau de film, pour être transportée vers le tambour d'enregistrement (9) par une surface de transport et de guidage (30, 31),
c) on arrête les moyens de transport de film (22, 23) lorsque le début de la nappe de film (25) transportée se trouve dans la position de début de fixation au niveau d'un rouleau applicateur (62) d'un dispositif applicateur (61) et au niveau d'une rangée d'orifices d'aspiration (38') du tambour d'enregistrement (9),
d) le rouleau applicateur (62) du dispositif applicateur (61) est abaissé pour presser le début de la nappe de film (25) contre le tambour d'enregistrement (9), et par mise en oeuvre d'une rangée d'orifices d'aspiration (38') reliés au vide, le début de la nappe de film (25) est bloqué sur le tambour d'enregistrement (9),
e) on démarre les moyens de transport de film (22, 23) et l'entraînement de positionnement (54) pour entraîner en rotation le tambour d'enregistrement (9) et transporter et fixer d'autres nappes de film (25) sur le tambour d'enregistrement (9),
f) lors de la fixation de la nappe de film (25), on mesure la longueur de la nappe de film dans un dispositif de mesure de longueur de film (32) et on arrête les moyens de transport de film (22, 23) ainsi que le moyen d'entraînement de positionnement (54) lorsque l'extrémité de la feuille de film (25') à couper de la nappe de film (25), et possédant une longueur prédéterminée, se trouve sous le dispositif de coupe de film (26),
g) on coupe la feuille de film (25') de la nappe (25) par le dispositif de coupe de film (26), on tend la partie résiduelle de la feuille de film (25') à l'aide du moyen d'entraînement de positionnement (54) sur le tambour d'enregistrement (9), puis on soulève le rouleau applicateur (62) du dispositif applicateur (61) par rapport au tambour d'enregistrement (9),
h) on insole la feuille de film (25') fixée à l'aide de l'organe d'enregistrement (48) en procédant point par point et ligne par ligne,
i) on fait tourner le tambour d'enregistrement (9), après insolation, par le moyen d'entraînement de positionnement (54), jusque dans sa position de début de détachement, et jusque dans la position de début de détachement, on abaisse le rouleau applicateur (62) du dispositif applicateur (61) et un doigt de relevage (68) d'un dispositif de relevage (66) sur le tambour d'enregistrement (9) et,
j) on pèle la feuille de film (25') insolée, en faisant tourner le tambour d'enregistrement (9) à l'aide du doigt d'enlèvement (68) abaissé par rapport à la surface du tambour.

29. Mise en oeuvre du dispositif selon la revendication 28, caractérisée en ce que:
a) après le blocage du début de la nappe de film (25) sur le tambour d'enregistrement (9) on ne démarre que les moyens de transport de film (22, 23) et, en tirant une nappe de film supplémentaire (25) de la cassette à rouleau de film (3), on forme dans la zone initiale de la nappe de film (25) une boucle de film de longueur donnée, et
b) après formation de la boucle de film (86) on démarre le moyen d'entraînement de positionnement (54) pour faire tourner le tambour d'enregistrement (9) et on transporte une autre nappe de film (25) tout en conservant la boucle de film (86) ainsi formée vers le tambour d'enregistrement (9), et on fixe.

30. Mise en oeuvre du dispositif selon les revendications 28 ou 29, caractérisée en ce que la valeur nominale du vide prévue pour la phase d'insolation par ouverture de la vanne d'air auxiliaire (43), est abaissée pendant la durée de la phase de fixation pour aspirer la feuille de film (25') avec une dépression réduite.

31. Mise en oeuvre du dispositif selon l'une des revendications 28 à 30, caractérisée en ce que:
a) la valeur nominale et la valeur nominale réduite du vide sont mesurées par le dispositif de mesure de vide (42),
b) la valeur réelle mesurée est comparée à des valeurs de consigne et,
c) dans le cas où les valeurs réelles mesurées n'atteignent pas les valeurs de consigne, on annule les opérations effectuées jusqu'alors et on transporte la nappe de film (25) de nouveau en retour dans la cassette à rouleau de film (3).

32. Mise en oeuvre du dispositif selon l'une des revendications 28 à 31, caractérisée en ce que la cassette à rouleau de film (3) est chargée avec le rouleau de film (15) à l'extérieur de l'appareil de reproduction, on place dans la chambre obscure (1) de l'appareil de reproduction, puis on dépose sur le plateau de chargement (5), et on bloque.

33. Mise en oeuvre du dispositif selon l'une des revendications 28 à 32, caractérisée en ce qu'on mesure la longueur de la nappe de film (25) qui a traversé le dispositif de mesure de longueur de film (32) et on compare la longueur de film mesurée à la distance constante entre le dispositif de mesure de longueur de film (32) et le repère de fixation (84) en position de début de fixation du tambour d'enregistrement (9), par une comparaison continue, et on arrête les moyens de transport de film (22, 23) lorsqu'il y a égalité, le début de la nappe de film (25) se trouvant alors sur le repère de fixation (84).

34. Mise en oeuvre du dispositif selon l'une des revendications 28 à 33, caractérisée en ce qu'on mesure la longueur de la nappe de film (25) transportée de façon supplémentaire dans le dispositif de mesure de longueur de film (32), et on compare la longueur de film mesurée à une longueur prédéterminée pour la boucle de film (86) et, en cas d'identité, on arrête le moyen de transport de film (22, 23).

35. Mise en oeuvre du dispositif selon l'une des revendications 28 à 34, caractérisée en ce que lorsqu'on fixe la nappe de film (25) on poursuit la mesure de la longueur de la nappe de film avec le dispositif de mesure de longueur de film (32) en partant de la longueur de film mesurée jusqu'alors, et on compare la longueur de film mesurée instantanément, à la longueur prédéterminée de chaque feuille de film (25') à fixer en tenant compte de la distance constante entre le dispositif de mesure de longueur de film (32) et le dispositif de coupe de film (26), et en cas d'égalité, on arrête les moyens de transport de film (22, 23) et le moyen d'entraînement de positionnement (54), l'extrémité de la feuille de film (25') à couper de la bande de film (25) se situant sous le dispositif de coupe de film (26).

36. Mise en oeuvre du dispositif selon l'une des revendications 28 à 35, caractérisée en ce qu'après découpe de la feuille de film (25') on rembobine la nappe de film (25) dans la cassette à rouleau de film (3) par le moteur d'enroulement (18), et on enroule le rouleau de film (15).

37. Mise en oeuvre d'un dispositif de fixation automatique d'un matériau de film sur un tambour d'enregistrement d'un appareil de reproduction et pour fixer le matériau de film insolé par l'organe d'enregistrement, du tambour d'enregistrement ayant une rangée d'orifices d'aspiration susceptible d'être reliée à une pompe à vide, fixe, cette rangée étant réalisée dans la surface enveloppe, axialement par rapport à l'axe du tambour, et pouvant être reliée par une conduite d'aspiration à une pompe à vide fixe, dispositif selon lequel:
a) on charge une cassette à rouleau de film (3), au-dessus de l'appareil de reproduction, par un rouleau de film (15), on place dans la chambre obscure (1) de l'appareil de reproduction puis on dépose sur le plateau de chargement (5) et on bloque,
b on fait tourner le tambour d'enregistrement (9) à l'aide d'un moyen d'entraînement de positionnement (54) pour venir dans une position de début de fixation dans laquelle un repère de fixation (84) prévu sur le tambour d'enregistrement (9) se trouve au niveau d'un rouleau applicateur (62) d'un dispositif applicateur (61) et au niveau d'une rangée d'orifices d'aspiration (38'), le repère de fixation (84) marquant la ligne enveloppe respective du tambour d'enregistrement (9) sur lequel doit se trouver le début d'une feuille de film (25') à fixer sur le tambour d'enregistrement (9),
c) on démarre le moyen de transport de film (22, 23) et on dévide la nappe de film (25) du rouleau (15) de la cassette à rouleau de film (3), et on transporte sur une surface de transport et de guidage (30 ; 31) vers le tambour d'enregistrement (9),
d) on mesure la longueur de la nappe de film (25) ayant traversé le dispositif de mesure de longueur de film (32), et on compare la longueur de film mesurée à la distance constante entre le dispositif de mesure de longueur de film (32) et le repère de fixation (84) dans la position de début de fixation du tambour d'enregistrement (9), en procédant en continu, et on arrête les moyens de transport de film (22, 23) lorsqu'il y a égalité, le début de la nappe de film (25) se trouvant sur le repère de fixation (84),
e) on abaisse le rouleau applicateur (62) du dispositif applicateur (61) contre le tambour d'enregistrement (9) et on applique le début de la nappe de film (25) contre le tambour d'enregistrement (9),
f) on branche la pompe à vide (44) et on bloque le début de la nappe de film (25) sur le tambour d'enregistrement (9) à l'aide de la rangée d'orifices d'aspiration (38'),
g) on démarre de nouveau les moyens de transport de film (22, 23), on fait sortir une nappe de film supplémentaire (25) de la cassette à rouleau de film (3) et on forme une boucle de film (86) dans la zone initiale de la nappe de film (25) en poussant la nappe de film (25),
h) on mesure la longueur de la nappe de film (25) transportée en plus dans le dispositif de mesure de longueur de film (32) et on compare cette longueur de film mesurée à une longueur prédéterminée pour la boucle de film (86) et en cas d'égalité, on arrête les moyens de transport de film (22, 23),
i) on démarre le moyen d'entraînement de positionnement (54) pour faire tourner le tambour d'enregistrement (9) et les moyens de transport de film (22, 23), on transporte l'autre bande de film (25) sur le tambour d'enregistrement (9) et on fixe sur le tambour d'enregistrement (9), rotatif, les vitesses des moyens d'entraînement de film (22, 23) et du moyen d'entraînement de positionnement (54) étant accordées l'une par rapport à l'autre pour que la boucle de film (86) reste pratiquement constante,
j) lorsqu'on fixe la bande de film (25), on poursuit la mesure de la longueur de film dans le dispositif de mesure de longueur de film (32) en partant de la longueur de film mesurée jusqu'alors, on poursuit et on compare la longueur de film mesurée instantanément à la longueur prédéterminée de la feuille de film (25') fixée respectivement en tenant compte de la distance constante entre le dispositif de mesure de longueur de film (32) et un dispositif de coupe de film (26) et, en cas d'égalité, on arrête les moyens de transport de film (22, 23) et le moyen d'entraînement de positionnement (54), l'extrémité de la feuille de film (25') à couper de la nappe de film (25) se situant sous le dispositif de coupe de film (26),
k) on sépare le feuille de film (25') à fixer, ayant une longueur prédéterminée, par rapport à la nappe de film (25) à l'aide du dispositif de coupe de film (26), on fait revenir la nappe de film (25) en démarrant les moyens de transport de film (22, 23) et un moteur d'enroulement (18) dans la cassette à rouleau de film (3), et on enroule sur le rouleau de film (15),
l) on démarre de nouveau le moyen d'entraînement de positionnement(54), on fixe la partie résiduelle de la feuille de film (25') sur le tambour d'enregistrement (9) et on arrête de nouveau le moyen d'entraînement de positionnement (54) lorsque le tambour d'enregistrement (9) se trouve en position de début d'insolation dans laquelle le repère de fixation (84) se trouve sur un axe optique de l'organe d'enregistrement (48),
m) dans la position de début d'insolation pour le tambour d'enregistrement (9), on soulève le moyen d'entraînement de positionnement (54) et le rouleau applicateur (62) du dispositif applicateur (61), par rapport au tambour d'enregistrement (9),
n) on branche un moteur principal (49) pour faire tourner le tambour d'enregistrement (9) et on insole point par point et ligne par ligne la feuille de film (25') fixée sur le tambour d'enregistrement (9), rotatif, en utilisant l'organe d'enregistrement (48),
o) après insolation de la feuille de film (25') on arrête le moteur principal (49) et on abaisse le moyen d'entraînement de position (54) de nouveau sur le tambour d'enregistrement (9) et on démarre,
p) on fait tourner le tambour d'enregistrement (9) par le moyen d'entraînement de positionnement (54) dans une position de début de fixation dans laquelle un doigt de dégagement (68) abaissé sur le tambour d'enregistrement (9) et appartenant à un dispositif de dégagement (66), se situe sur la génératrice marquée par un repère de détachement (90) sur le tambour d'enregistrement (9),
q) en position de début de détachement, on abaisse le rouleau applicateur (62) du dispositif applicateur (61) et le doigt de soulèvement (68) du dispositif de soulèvement (66) sur le tambour d'enregistrement (9), et on démarre le moteur de transport (74) de la paire de rouleaux de transport de film (73), et
r) on démarre le moyen d'entraînement de positionnement (54) et on pèle la feuille de film (25') insolée, à l'aide du doigt de détachement (68) abaissé, pour séparer la feuille de la surface du tambour et, en faisant tourner le tambour d'enregistrement (9) on transporte vers la paire de rouleaux de transport (73) et on transporte de celui-ci, à travers l'ouverture de sortie de film (67) de la chambre obscure (1), pour sortir de l'appareil de reproduction.
